# EUROPEAN PATENT APPLICATION

(11) **EP 2 650 318 A1**
(43) Date of publication of application: **16.10.2013**
(21) Application number: 11847452.7
(22) Date of filing: 06.12.2011
(51) Int. Cl.: C08G 65/28, C08G 14/12, C08G 18/48

(54) **METHOD FOR PRODUCING POLYETHER POLYOL AND METHOD FOR PRODUCING RIGID FOAM SYNTHETIC RESIN**

(30) Priority: 07.12.2010 JP 2010272684
(71) Applicant: Asahi Glass Company, Limited, Tokyo 100-8405 (JP)
(72) Inventor: YABUNO, Tatsuya, Tokyo 100-8405 (JP); SHIMIZU, Katsuhiko, Tokyo 100-8405 (JP); HAYASHI, Tomohiro, Tokyo 100-8405 (JP)
(74) Representative: Blodig, Wolfgang
(86) International application number: PCT/JP2011/078210
(87) International publication number: WO 2012/077688

(57) **Abstract**

To provide a method for producing a polyether polyol having a low viscosity and little odor, whereby when a rigid foam synthetic resin is produced, good strength and flame retardancy can be obtained. A method for producing a polyether polyol, which comprises ring-opening addition of an alkylene oxide to an initiator obtainable by reacting a phenol, an aldehyde and an alkanolamine, and which comprises a first step of ring-opening addition of at least one member selected from propylene oxide and butylene oxide to the initiator in the absence of a catalyst, and a second step of ring-opening addition of an alkylene oxide of which at least a part is ethylene oxide, to a reaction product of the first step, in the presence of a catalyst, wherein the proportion of ethylene oxide in the total amount of the alkylene oxide to be added to the initiator, is from 5 to 95 mol%.

## Description

### TECHNICAL FIELD

The present invention relates to a process for producing a polyether polyol and a method for producing a rigid foam synthetic resin using the polyether polyol.

### BACKGROUND ART

It is widely practiced to produce a rigid polyurethane foam or a rigid polyisocyanurate foam (which is generally referred to as a rigid foam synthetic resin in this specification) by reacting an active hydrogen compound such as a polyol and a polyisocyanate compound in the presence of a foam stabilizer, a catalyst and a blowing agent. The rigid foam synthetic resin is suitably used as a heat-insulating material for various apparatus or buildings.

The rigid foam synthetic resin is produced by using a forming method such as a spray method, a continuous board forming method or an injection method.

For example, at building sites, etc., a spray method is used in many cases. The spray method may, for example, be a method wherein a polyol system liquid containing a polyol and a blowing agent, etc., and a polyisocyanate compound are, respectively, supplied by pumps and while being sprayed from a spray gun to a wall surface, etc. to be treated, reacted and foamed on the wall surface, etc. to form a heat-insulating material, etc.

The rigid foam synthetic resin is required to have flame retardancy from the viewpoint of fire control performance as a building material. Especially when a spray method is employed, the flame retardancy is required also from the viewpoint of prevention of a fire accident due to welding sparks at the working site.

Polyether polyols produced by utilizing a reaction product (Mannich condensate) obtainable by a Mannich condensation reaction of a phenol, an aldehyde and an alkanolamine, are appreciated in that high flame retardancy is thereby readily obtainable.

In the production of rigid foam synthetic resins, hydrofluorocarbons (such as HFC-245fa, HFC-365mfc, etc., hereinafter referred to as HFC) are mainly used as blowing agents, at present. However, when the load to the environment is taken into account, it is desired to reduce the use of such HFC. In order to reduce the amount of HFC to be used and to supplement the reduction, a technique to use water as the blowing agent, has been studied.

However, as between the amounts of water and HFC required to obtain foam densities of an equal level, the amount of water is extremely small, so that if water is used instead of HFC, the solvent effect due to HFC tends to decrease and the viscosity of the polyol system liquid tends to increase, thus leading to a problem of deterioration in the forming or working performance. Therefore, it is desired to reduce the viscosity of the polyol system liquid by lowering the viscosity of the polyol.

The following Patent Documents 1 and 2 relate to a Mannich polyol using a Mannich condensate as an initiator.

Patent Document 1 relates to a method for lowering the viscosity of a Mannich polyol by using a reaction product (a Mannich condensate) obtainable by a reaction such that the molar ratio of an alkylphenol:a diethanolamine:formaldehyde becomes 1:2.5 to 4:1.5 to 2.

In Patent Document 1, Example 1 discloses a Mannich polyol obtained by ring-opening addition of a mixture of propylene oxide and ethylene oxide to a reaction product (a Mannich condensate) by means of a catalyst, and Example 2 discloses a Mannich polyol obtained by reacting propylene oxide to the reaction product by means of a catalyst and then reacting ethylene oxide. Further, each of Mannich polyols disclosed in Comparative Examples 1 and 2 is one obtained simply by ring-opening addition of a mixture of propylene oxide and ethylene oxide to a reaction product of a phenol, an aldehyde and an alkanolamine, in the absence of a catalyst.

Patent Document 2 discloses a method wherein a Mannich condensate is stabilized by capping by a method of reacting a small amount of an alkylene oxide to the Mannich condensate substantially in the absence of a catalyst, and further reacted with an alkylene oxide to obtain a polyol.

Further, it is disclosed that the capping reaction proceeds swiftly in the absence of a basic alkylene oxide polymerization catalyst, and that as an alkylene oxide to be used for the capping, ethylene oxide reacts especially swiftly with the Mannich condensate and further reacts swiftly also with an alkylene oxide to be added, such being desirable (In the publication, from page 6, right upper column, line 16 to page 6, left lower column, line 6).

### PRIOR ART DOCUMENTS

### PATENT DOCUMENTS

Patent Document 1: JP-A-8-301820
Patent Document 2: JP-A-3-121113

### DISCLOSURE OF INVENTION

### TECHNICAL PROBLEM

However, even if it is attempted to lower the viscosity of a Mannich polyol by adjusting the ratio of a phenol, an aldehyde and an alkanolamine by the method disclosed in Patent Document 1, there is a case where good physical properties cannot be obtained when a rigid foam synthetic resin is produced by using such a Mannich polyol.

The present inventors presumed that if ethylene oxide having a linear molecular structure and little steric hindrance is employed as an alkylene oxide to be added to a Mannich condensate, it is possible to lower the viscosity of the Mannich polyol.

Therefore, firstly in the absence of a catalyst, ethylene oxide was added by ring-opening addition to a Mannich condensate for capping, and then, by using a catalyst, ethylene oxide was added by ring-opening addition, whereby the obtained Mannich polyol had a low viscosity, but had an odor. An odor of a polyol presents an uncomfortable feeling to workers, such being undesirable. Further, by using the obtained Mannich polyol, a rigid foam synthetic resin was produced, whereby it was found that the compression strength was inadequate.

Under these circumstances, the present invention has been made, and it is an object of the present invention to provide a method for producing a polyether polyol having a low viscosity and little odor, whereby when a rigid foam synthetic resin is produced, good strength and flame retardancy can be obtained, and a method for producing a rigid foam synthetic resin by using such a polyether polyol.

### SOLUTION TO PROBLEM

The present invention provides the following [1] to [14].
[1] A method for producing a polyether polyol, which comprises ring-opening addition of an alkylene oxide to an initiator which is a reaction product obtainable by reacting the following phenol, the following aldehyde and the following alkanolamine, wherein
   the step of ring-opening addition of an alkylene oxide to an initiator comprises a first step of ring-opening addition of at least one member selected from propylene oxide and butylene oxide to the initiator in the absence of a catalyst, and a second step of ring-opening addition of an alkylene oxide of which at least a part is ethylene oxide, to a reaction product of the first step, in the presence of a catalyst, and
   the proportion of ethylene oxide in the total amount of the alkylene oxide to be added by the ring-opening addition to the initiator, is from 5 to 95 mol%:
   Phenol: at least one member selected from the group consisting of phenol and phenol derivatives wherein at least one ortho position is unsubstituted,
   Aldehyde: at least one member selected from the group consisting of formaldehyde and acetaldehyde,
   Alkanolamine: at least one member selected from the group consisting of monoethanolamine, diethanolamine and 1-amino-2-propanol.
[2] The method for producing a polyether polyol according to [1], wherein the proportion of ethylene oxide in the total amount of the alkylene oxide to be added by the ring-opening addition to the initiator, is from 10 to 90 mol%.
[3] The method for producing a polyether polyol according to [1] or [2], wherein the proportion of the number of primary hydroxy groups in the total number of hydroxy groups of the polyether polyol is from 50 to 100%.
[4] The method for producing a polyether polyol according to any one of [1] to [3], wherein the second step is a step wherein the ring-opening addition reaction is carried out in one stage, and in such one stage, only ethylene oxide is added by ring-opening addition, or a step wherein the ring-opening addition reaction is carried out in two or more stages, and in the final stage, only ethylene oxide is added by ring-opening addition.
[5] The method for producing a polyether polyol according to any one of [1] to [4], wherein per 1 mol of the phenol, the aldehyde is used in an amount of at least 0.2 mol and at most 2 mol, and the alkanolamine is used in an amount of at least 1.5 mol and at most 10.5 mol.
[6] The method for producing a polyether polyol according to [5], wherein per 1 mol of the phenol, the aldehyde is used in an amount of at least 0.3 mol and at most 1.8 mol, and the alkanolamine is used in an amount of at least 2 mol and at most 10.5 mol.
[7] The method for producing a polyether polyol according to any one of [1] to [6], wherein the phenol derivatives are alkyl phenols substituted by at least one C₁₋₁₅ alkyl group.
[8] The method for producing a polyether polyol according to any one of [1] to [7], wherein the hydroxy value of the polyether polyol is from 200 to 800 mgKOH/g.
[9] A method for producing a rigid foam synthetic resin, which comprises reacting a polyol composition and a polyisocyanate compound in the presence of a blowing agent, a foam stabilizer and a catalyst, wherein the blowing agent contains water, and the polyol composition contains a polyether polyol obtainable by the method as defined in any one of [1] to [8].
[10] The method for producing a rigid foam synthetic resin according to [9], wherein the content of the polyether polyol in the polyol composition is from 20 to 100 mass%.
[11] The method for producing a rigid foam synthetic resin according to [9] or [10], wherein water is used alone as the blowing agent.
[12] The method for producing a rigid foam synthetic resin according to any one of [9] to [11], wherein the polyol composition contains a polymer-dispersed polyol.
[13] The method for producing a rigid foam synthetic resin according to [12], wherein the hydroxy value of the polymer-dispersed polyol is from 100 to 800 mgKOH/g.
[14] The method for producing a rigid foam synthetic resin according to any one of [9] to [13], wherein a spray method is used.

### ADVANTAGEOUS EFFECTS OF INVENTION

According to the present invention, it is possible to obtain a polyether polyol having little odor and a low viscosity. Further, by producing a rigid foam synthetic resin by using such a polyether polyol, it is possible to obtain a rigid foam synthetic resin having good strength and excellent flame retardancy.

According to the process for producing a rigid foam synthetic resin of the present invention, it is possible to obtain a rigid foam synthetic resin having good strength and also excellent flame retardancy.

Further, also in a case where water is used instead of HFC as a blowing agent, it is possible to suppress the viscosity of the polyol system liquid to be low. As the polyol system liquid becomes to have a low viscosity, its application efficiency will be good and it is possible to form a good rigid foam synthetic resin even by a spray method.

### DESCRIPTION OF EMBODIMENTS

In the present invention, the "polyol system liquid" is an opponent liquid to be reacted to a polyisocyanate compound and is a liquid containing, in addition to the polyol, optional additives such as a blowing agent, a foam stabilizer, a catalyst, etc., as the case requires.

In the present invention, the "rigid foam synthetic resin" is a general term for a rigid polyurethane foam and a rigid polyisocyanurate foam. Hereinafter, it may sometimes be referred to also as a rigid foam.

In the present invention, the "polymer-dispersed polyol" is one obtainable by polymerizing a monomer having a polymerizable unsaturated bond in a base polyol such as a polyether polyol or a polyester polyol, to form polymer particles, and is a polyol having such polymer particles dispersed in such a base polyol.

In the present invention, the "Mannich condensate" is a compound obtainable by reacting a phenol, an aldehyde and an alkanolamine.

In the present invention, the "Mannich polyol" is a compound obtainable by ring-opening addition of an alkylene oxide to a Mannich condensate.

### <Method for producing polyether polyol>

In the method for producing a polyether polyol of the present invention (hereinafter sometimes referred to also as "polyol (A)"), a reaction product obtainable by subjecting a phenol, an aldehyde and an alkanolamine to a Mannich condensation reaction, is used as an initiator, and to this initiator, an alkylene oxide is added by ring-opening addition to produce polyol (A). The reaction product to be used as an initiator, is one which contains non-reacted substances remaining after the Mannich condensation reaction.

In the present invention, the step of ring-opening addition of an alkylene oxide to an initiator comprises a first step of ring-opening addition of at least one member selected from propylene oxide and butylene oxide to the initiator in the absence of a catalyst, and a second step of ring-opening addition of an alkylene oxide of which at least a part is ethylene oxide, to a reaction product of the first step, in the presence of a catalyst.

### [Initiator]

The initiator contains a Mannich condensate obtained by subjecting a phenol, an aldehyde and an alkanolamine to a condensation reaction.

The phenol is at least one member selected from the group consisting of phenol and phenol derivatives of which at least one ortho position is unsubstituted. That is, the phenol is required only to have a hydrogen atom at an ortho position to the hydroxy group of phenol and may be phenol or a phenol derivative. One type of the phenol may be used alone, or two or more types of the phenol may be used in combination.

The phenol derivatives are preferably alkyl phenols substituted by at least one C₁₋₁₅ alkyl group. The substitution position of the alkyl group in the alkyl phenols may be any position i.e. an ortho, meta or para position. In one molecule of an alkyl phenol, the number of hydrogen atoms substituted by the alkyl group is from 1 to 4, preferably 1 or 2, most preferably 1 from the viewpoint of easy availability.

The number of carbon atoms in the alkyl group in an alkyl phenol is preferably from 1 to 10. As such an alkyl phenol, nonyl phenol or cresol is preferably used. Nonyl phenol is particularly preferred since it improves the compatibility of polyol (A) with a polyisocyanate compound and improves the appearance of cells.

As the aldehyde, one of formaldehyde and acetoaldehyde, or a mixture of both, is used. Among them, formaldehyde is preferred in that it improves the adhesive property of a rigid foam. Formaldehyde may be used in any form, i.e. it may be used in the form of a formaline solution, a methanol solution or paraformaldehyde. When it is used in the form of paraformaldehyde, the paraformaldehyde may be heated to form formaldehyde, and such formaldehyde may be used for the reaction of this step. The amount to be used, is calculated by the number of moles as calculated as formaldehyde.

The alkanolamine is at least one member selected from the group consisting of monoethanolamine, diethanolamine and 1-amino-2-propanol. Among them, diethanolamine is more preferred with a view to taking a balance between the improvement in the strength of the obtainable rigid foam and the reduction in the viscosity of polyol (A).

From such a viewpoint that the viscosity of polyol (A) can readily be made low and good strength is readily obtainable when a rigid foam is produced, per 1 mol of the phenol, the aldehyde is preferably at least 0.2 mol and at most 2 mol, more preferably at least 0.3 mol and less than 1.8 mol, further preferably at least 0.5 mol and at most 1.7 mol.

When it is at least the lower limit value within the above ranges, good strength of a rigid foam tends to be readily obtainable, and when it is at most the upper limit value, polyol (A) tends to readily have a low viscosity.

Per 1 mol of the phenol, the alkanolamine is preferably at least 1.5 mol and at most 10.5 mol, more preferably at least 2 mol and at most 10.5 mol, further preferably at least 2 mol and at most 10 mol.

When it is at least the lower limit value within the above ranges, polyol (A) tends to readily have a low viscosity, and when it is at most the upper limit value, the flame retardancy of a rigid foam tends to be readily obtainable.

Particularly preferably, per 1 mol of the phenol, the amount of the aldehyde to be used, is at least 0.3 mol and less than 1.8 mol, and the amount of the alkanolamine to be used, is at least 2 mol and at most 10.5 mol.

The reason as to why the ratio of the aldehyde to be used against the phenol is influential over the viscosity of polyol (A) and the strength, is considered to be as follows. In the following, description will be made by using an alkyl phenol having alkyl group R at the para position as an example of the phenol, formaldehyde as an example of the aldehyde and diethanolamine as an example of the alkanolamine, but the same applies to other compounds.

That is, at the time of reacting the phenol, the aldehyde and the alkanolamine, as the aldehyde is larger in amount than the phenol, it is more likely that a Mannich condensate having a structure wherein the phenol:the aldehyde are reacted in a ratio of 1:2 (molar ratio) as represented by the following formula (iii), or a polynuclear compound represented by the formula (iv), is formed. On the other hand, as the aldehyde is smaller in amount, it is more likely that a Mannich condensate having a structure wherein the phenol:the aldehyde are reacted in a ratio of 1:1 (molar ratio) as represented by the following formula (i), or a non-reacted alkyl phenol as represented by the formula (ii), is formed.

As compared with the compound represented by the following formula (iii) or (iv), the Mannich condensate represented by the formula (i) is likely to lower the viscosity of polyol (A). The presence of the non-reacted phenol represented by the formula (ii) contributes to lowering of the viscosity of polyol (A), but on the other hand, as it increases, the average number of hydroxy groups in polyol (A) decreases, whereby the strength tends to decrease.

Further, the Mannich condensate represented by the formula (i) has a small molecular weight as compared with the compound represented by the formula (iii) or (iv). Accordingly, a Mannich polyol (polyol (A)) obtainable by using it as an initiator, will contribute to improvement in the compatibility with an isocyanate compound or water and will contribute to refinement of cells of the obtainable rigid foam. It is considered that as cells of the rigid foam are refined, thermal conduction by radiation will be suppressed, and the thermal conductivity will be lowered.

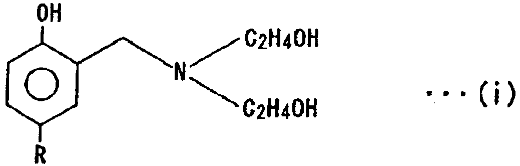

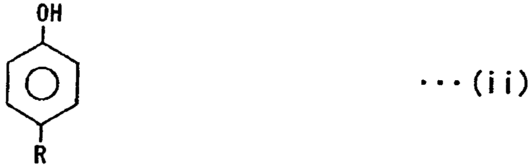

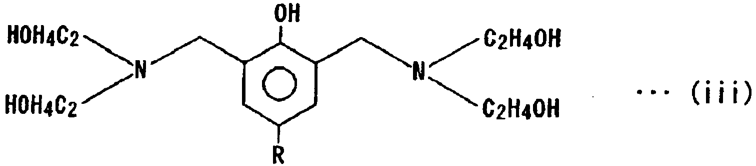

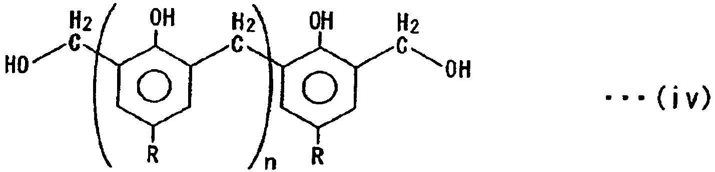

The reason as to why the ratio of the alkanolamine to be used is influential over the viscosity of polyol (A) and the flame retardancy, is considered to be as follows. If the ratio of the alkanolamine to be used is large, and a non-reacted alkanolamine is consequently contained in the reaction product (the Mannich condensate), at the time of producing polyol (A) by using the reaction product as an initiator, a polyol having an alkylene oxide added by ring-opening addition to the non-reacted alkanolamine will be formed. Such a polyol will contribute to lowering of the viscosity, but on the other hand, as it increases, the content ratio of the Mannich polyol having an aromatic ring relatively decreases, whereby the flame retardancy is likely to decrease.

### [Step of synthesizing Mannich condensate]

The Mannich condensation reaction can be carried out by a known method. It is preferred that the phenol, the aldehyde and the alkanolamine are mixed and heated at a temperature of from 50 to 150°C, preferably from 80 to 130°C, for the reaction. As the mixing method, methods (1) to (3) are conceivable. (1) The phenol, the aldehyde and the alkanolamine are simultaneously mixed. (2) To a mixture of the phenol and the alkanolamine, the aldehyde is mixed. (3) To a mixture of the aldehyde and the alkanolamine, the phenol is mixed.

Method (2) is most preferred in that formation of a polynuclear compound is less, and method (3) is next preferred.

Water will be formed by the Mannich condensation reaction, or when an aqueous formaline solution is used, water will be present in the reaction product. Therefore, it is preferred to remove water from the reaction product by a suitable method. For example, the internal pressure of the reaction apparatus is lowered to from 1.33 to 66.5 kPa at from 100 to 150°C for dehydration under reduced pressure to bring the residual water content to a level of about 1 mass%. The step of removing water may also be carried out before or after the step of ring-opening addition of an alkylene oxide, and it is preferred to carry out it before the step of ring-opening addition of an alkylene oxide.

### [First step]

In the first step, the reaction product obtained in the step of synthesizing a Mannich condensate is used as an initiator, and at least one member selected from propylene oxide (which may be referred to also as PO) and butylene oxide (which may be referred to also as BO) is added to the initiator by ring-opening addition in the absence of a catalyst, whereby hydroxy groups in the Mannich condensate will be capped and stabilized by PO and/BO. Hereinafter, the above initiator will be referred to as initiator (S1).

One to be added to initiator (S1) by ring-opening addition may be PO alone, BO alone, or both PO and BO. In the case of both, they may be sequentially added, or a mixture of PO and BO may be added, or a combination of such manners may be employed. From the viewpoint of operation efficiency, it is preferred that the mixture is added. With a view to lowering the viscosity of the obtainable polyol, it is preferred to add PO alone by ring-opening addition.

In the first step, by carrying out the reaction for capping without using a catalyst, it is possible to suppress an increase of heat of reaction. If the heat of reaction is too high, a side reaction of Mannich condensates one another to form polycyclic compounds tends to preferentially take place over the reaction for ring-opening addition of an alkylene oxide to a Mannich condensate. If such a polycyclic compound is formed, the viscosity of the obtainable polyol is likely to be thereby increased.

Further, by using PO and/or BO for capping of the Mannich condensate, it is possible to reduce the odor of polyol (A).

The reason is considered to be as follows. In initiator (S1) to be used for the production of polyol (A), a Mannich condensate as an aromatic amine compound is contained, and a non-reacted alkanolamine as an aliphatic amine compound may also be present. If it is attempted to add EO to initiator (S1) in the first step, even if no catalyst is used, these amine compounds are considered to act as catalysts to let EO molecules react one another to form cyclic compounds (formation of e.g. crown ethers is presumed), and such cyclic compounds are considered to cause the odor. Whereas, in the present invention, no EO is used, and PO and/or BO is used in the first step, whereby it is presumed that cyclic compounds causing the odor will not be formed, and thus, polyol (A) having little odor is obtainable.

In the first step, the total amount of PO and/or BO to be added to initiator (S1) is preferably from 1 to 10 mol, more preferably from 2 to 5 mol, per 1 mol of the phenol used for the Mannich condensation reaction. When the amount of PO and/or BO to be added is at least the lower limit value within the above range, it is possible to suppress the odor of the obtainable polyol, and when it is at most the upper limit value, it is possible to obtain a polyol having a low viscosity.

The reaction temperature in the first step is preferably from 70 to 150°C, particularly preferably from 90 to 140°C. When the reaction temperature is at least the lower limit value within the above range, ring-opening addition of PO and/or BO fed is facilitated, and when it is at most the upper limit value, it is possible to suppress the side reaction of the Mannich condensates one another to form polycyclic compounds which cause an increase of the viscosity.

The reaction pressure is preferably from 0 to 0.9 MPa, particularly preferably from 0 to 0.8 MPa. When the reaction pressure is within such a range, the system will not be under a reduced pressure condition, and the side reaction of the Mannich condensates one another to form polycyclic compounds, which proceeds while generating water, hardly takes place, whereby it is possible to avoid an increase in the viscosity of the Mannich polyol.

### [Second step]

In the second step, an alkylene oxide of which at least a part is ethylene oxide (which may be referred to also as EO) is added by ring-opening addition to the reaction product obtainable in the first step, in the presence of a catalyst to obtain polyol (A).

In this step, only EO may be added by ring-opening addition. Otherwise, EO and an alkylene oxide other than EO may be added by ring-opening addition. In the case where EO and an alkylene oxide other than EO are to be added by ring-opening addition, a mixture obtained by mixing EO and an alkylene oxide other than EO, may be added by ring-opening addition, or EO and an alkylene oxide other than EO may separately be added by ring-opening addition, or a mixture obtained by mixing EO and an alkylene oxide other than EO, and EO or an alkylene oxide other than EO, may separately be added by ring-opening addition.

The second step is preferably a step wherein the ring-opening addition reaction is carried out in one stage, and in such one stage, only EO is added by ring-opening addition, or a step wherein the ring-opening addition reaction is carried out in two or more stages, and in the final stage, only EO is added by ring-opening addition, from a viewpoint such that it is thereby possible to increase the proportion of primary hydroxy groups in polyol (A).

In a case where the second step is carried out in n stages (n is an integer of 2 or more), it is more preferred that in the n-th stage, ring-opening addition of only EO is carried out, in the (n-1)th stage, ring-opening addition of at least one member selected from alkylene oxides other than EO is carried out, and in each stage of from the 1 st stage to the (n-2)th stage, ring-opening addition of EO and at least one member selected from the group consisting of alkylene oxides other than EO is carried out. In a case where in each stage of from the 1 st stage to the (n-1)th stage, two or more alkylene oxides are to be added by ring-opening addition, a mixture of such two or more alkylene oxides may be added by ring-opening addition.

PO and BO are preferred as the alkylene oxides other than EO.

Particularly from such a viewpoint that the odor of an obtainable polyol can easily be suppressed, it is preferred to carry out the second step in two stages, so that in the 1 st stage, only PO is added by ring-opening addition, and then, in the 2nd stage, only EO is added by ring-opening addition.

The total amount of the alkylene oxide to be used for ring-opening addition in this step is preferably from 5 to 30 mol, particularly preferably from 10 to 20 mol, per 1 mol of the phenol used for the synthesis of initiator (S1). When the total amount of the alkylene oxide is at least the lower limit value within the above range, the hydroxy value and viscosity of polyol (A) to be formed, tend to be low, and when it is at most the upper limit value, shrinkage of a rigid foam can easily be prevented when the obtainable polyol (A) is used for the production of the rigid foam.

In the first and second steps, the proportion of EO in the total amount of the alkylene oxide to be added by the ring-opening addition to initiator (S1), is preferably from 5 to 95 mol%, more preferably from 10 to 90 mol%, particularly preferably from 15 to 90 mol%. When the proportion of EO is at least the lower limit value within the above range, the viscosity of polyol (A) tends to be low, and when it is at most the upper limit value, good strength of a rigid foam tends to be readily obtainable.

In a case where polyol (A) is composed of plural types of polyol (A), the above proportion of EO in the total amount of the alkylene oxide is a value based on the entire polyol (A).

In polyol (A) obtainable upon completion of the second step, the proportion of the number of primary hydroxy groups in the total number of hydroxy groups is preferably from 50 to 100%, particularly preferably from 75 to 95%. When the proportion of the primary hydroxy groups is at least the lower limit value within the above range, a high activity of polyol (A) can easily be obtainable, and when the activity is high, a good foaming property and a quick reaction can easily be obtainable at the time of the production of a rigid foam. Further, when it is at most the upper limit value, it is possible to obtain a high activity while preventing a decrease in the strength of a rigid foam to be obtained.

The proportion of the number of hydroxy groups can be increased by increasing the proportion of the number of hydroxy groups bonded to oxyethylene groups in polyol (A).

The catalyst to be used in the second step may, for example, be an alkali metal compound catalyst (such as a sodium type catalyst, a potassium type catalyst, a cesium type catalyst or the like), a cationic polymerization catalyst, a double metal cyanide complex catalyst or a phosphazenium compound. From such a viewpoint that the catalyst is readily available, an alkali metal compound catalyst is preferred, and from such a viewpoint that a polyol containing little by-products is obtainable, a double metal cyanide complex catalyst is preferred.

In a case where the second step is carried out in n stages (n is an integer of 2 or more), the catalyst may be changed in each stage, but from the viewpoint of efficiency, it is preferred to use the same catalyst.

The sodium type catalyst or the potassium type catalyst may, for example, be sodium metal, potassium metal, a sodium alkoxide or potassium alkoxide (such as sodium methoxide, sodium ethoxide, sodium propoxide, potassium methoxide, potassium ethoxide or potassium propoxide), sodium hydroxide, potassium hydroxide, sodium carbonate or potassium carbonate.

The cesium type catalyst may, for example, be cesium metal, a cesium alkoxide (such as cesium methoxide, cesium ethoxide or cesium propoxide), cesium hydroxide or cesium carbonate.

The cationic polymerization catalyst may, for example, be MoO₂ (diketonate)Cl, MoO₂ (diketonate)OSO₂CF₃, trifluoromethane sulfonic acid, boron trifluoride, a boron trifluoride-coordinated compound (such as boron trifluoride diethyl etherate, boron trifluoride dibutyl etherate, boron trifluoride dioxanate, boron trifluoride acetic anhydrate or a boron trifluoide triethylamine complex compound), or an aluminum or boron compound having at least one aromatic hydrocarbon group containing fluorine atoms or one aromatic hydrocarbon oxy group containing fluorine atoms.

The above aromatic hydrocarbon group containing fluorine atoms may, for example, be pentafluorophenyl, tetrafluorophenyl, trifluorophenyl, 3,5-bis(trifluoromethyl)trifluorophenyl, 3.5-bis(trifluoromethyl)phenyl, β-perfluoronaphthyl or 2,2',2"-perfluorobiphenyl.

The above aromatic hydrocarbon oxy group containing fluorine atoms is preferably a hydrocarbon oxy group having an oxygen atom bonded to the above aromatic hydrocarbon group containing fluorine atoms.

The double metal cyanide complex catalyst (hereinafter referred to also as "DMC catalyst") has an organic ligand. The organic ligand includes, for example, tert-butyl alcohol, n-butyl alcohol, iso-butyl alcohol, tert-pentyl alcohol, iso-pentyl alcohol, N,N-dimethyl acetamide, ethylene glycol mono-tert-butyl ether, ethylene glycol dimethyl ether (referred to also as glyme), diethylene glycol dimethyl ether (referred to also as diglyme), triethylene glycol dimethyl ether (referred to also as triglyme), isopropyl alcohol and dioxane. The dioxane may be 1,4-dioxane or 1,3-dioxane, but 1,4-dioxane is preferred. The ligand may be one type only, but two or more types may be used in combination.

Among them, it is preferred to have tert-butyl alcohol as the organic ligand. Accordingly, it is preferred to use a DMC catalyst having tert-butyl alcohol as at least a part of its organic ligands. Such a DMC catalyst is highly active, and it is thereby possible to produce a polyol having a low total unsaturation degree.

The hydroxy value of polyol (A) is preferably from 200 to 800 mgKOH/g, more preferably from 200 to 550 mgKOH/g, particularly preferably from 250 to 450 mgKOH/g. In a case where polyol (A) is composed of plural types of polyol (A), the hydroxy value of each type of polyol (A) may be within the above range.

When the hydroxy value of polyol (A) is at least the lower limit value within the above range, it is easy to secure the strength of a rigid foam to be obtained and good dimensional stability is readily obtainable. When it is at most the upper limit value within the above range, the proportion of oxyalkylene chains in polyol (A) tends to increase, and polyol (A) tends to have a low viscosity. Further, a rigid foam to be produced tends to have little brittleness, and adhesiveness tends to be readily obtainable.

According to the method for producing polyol (A) of the present invention, it is possible to obtain polyol (A) having a low viscosity and little odor.

That is, as shown in Examples given hereinafter, by using PO and/or BO, i.e. not EO, as the alkylene oxide for capping the Mannich condensate in the first step, it is possible to reduce the odor of polyol (A). This is a discovery made for the first time by the present inventors.

Further, according to the present invention, as shown in Examples given hereinafter, by using at least EO as the alkylene oxide to be added by ring-opening addition in the second step, it is possible to reduce the viscosity of polyol (A), and as the amount of such EO becomes larger, the viscosity of polyol (A) tends to be lower. Further, the alkylene oxide to be added by ring-opening addition to initiator (S1) is not entirely EO but partially PO and/or BO, whereby it is possible to improve the compression strength of a rigid foam.

The reason is considered to be such that oxyalkylene chains derived from EO have linear molecular structures and thus have little steric hindrance, whereby they contribute to lowering of the viscosity of polyol (A), and oxyalkylene chains derived from PO or BO have branched chains in their molecular structures and thus have substantial steric hindrance, whereby they make polyol (A) to be rigid and thus contribute to improvement in the compression strength.

According to the present invention, it is possible to obtain polyol (A) having a viscosity at 25°C of e.g. at most 2,000 mPa·s, preferably at most 1,000 mPa·s, particularly preferably at most 500 mPa·s. The lower limit value of the viscosity is not particularly limited, however, with a view to securing the strength of a rigid foam, it is preferably at least 200 mPa·s, more preferably at least 300 mPa·s.

### <Method for producing rigid foam synthetic resin>

The method for producing a rigid foam synthetic resin of the present invention has a reaction/foaming step of reacting a polyol composition and a polyisocyanate compound in the presence of a blowing agent, a foam stabilizer and a catalyst. Hereinafter, the polyol composition as a raw material for a rigid foam synthetic resin in the present invention will be referred to also as composition (P), and the polyisocyanate compound will be referred to also as polyisocyanate compound (I).

### [Polyol composition]

Composition (P) contains polyol (A). Composition (P) may contain, in addition to polyol (A), at least one polyol other than polyol (A) and may also contain fine polymer particles. The content of polyol (A) in composition (P) is preferably from 20 to 100 mass%, more preferably from 30 to 99 mass%, particularly preferably from 30 to 80 mass%. Within such a range, preferred strength, heat resistance and flame retardancy will be obtainable with the rigid foam to be obtained, and cracking of the foam will be prevented. Further, in a spray method, a good activity is obtainable, whereby side flow at the time of spraying against a wall surface can be suppressed, and adhesion of foam layers one another at the time of spraying to form multi-layers will be improved, whereby good working performance is obtainable.

### [Polyol (C)]

Composition (P) may contain a polyester polyol having a hydroxy value of from 100 to 400 mgKOH/g (hereinafter referred to also as polyol (C)) obtainable by polycondensation of a polybasic carboxylic acid and a polyhydric alcohol.

At least one of the polybasic carboxylic acid and the polyhydric alcohol to be polycondensed is preferably an aromatic compound having an aromatic ring.

As the polybasic carboxylic acid, a dicarboxylic acid or its anhydride is preferred. As a dicarboxylic acid having an aromatic ring, a phthalic acid such as phthalic anhydride may, for example, be mentioned. As a dicarboxylic acid having no aromatic ring, maleic acid, fumaric acid or adipic acid may, for example, be mentioned.

As the polyhydric alcohol, a diol is preferred. As a diol having an aromatic ring, a diol obtainable by adding ethylene oxide to bisphenol A may, for example, be mentioned. As a diol having no aromatic ring, ethylene glycol, diethylene glycol or polyethylene glycol may, for example, be mentioned.

The hydroxy value of polyol (C) is from 100 to 500 mgKOH/g, preferably from 100 to 400 mgKOH/g, particularly preferably from 100 to 350 mgKOH/g.

In a case where a plurality of polyester polyols are used in combination as polyol (C), the hydroxy value of each polyester polyol may be within the above range.

When the hydroxy value of polyol (C) is at most the upper limit value within the above range, brittleness of a rigid foam to be obtained tends to be little, whereby adhesiveness tends to be readily obtainable. Further, the viscosity of polyol (C) tends to be low, whereby the mixing property in composition (P) tends to be good, such being desirable. Furthermore, in a spray method, it is possible to set the isocyanate index to be high in an operation by using the polyol system liquid and polyisocyanate compound (I) in a prescribed volume ratio. On the other hand, when the hydroxy value of polyol (C) is at least the lower limit value within the above range, the obtainable rigid foam tends to be less shrinkable. That is, within the above range, it is possible to increase the adhesive strength, particularly the initial adhesive strength, of the rigid foam, while maintaining the good mixing property of the raw material.

In a case where polyol (C) is contained in composition (P), its content is preferably from 1 to 80 mass%, more preferably from 1 to 70 mass%, particularly preferably from 20 to 70 mass%, in the entire composition (P). Within such a range, the effect to improve the strength of the rigid foam and the effect to improve the adhesiveness can sufficiently be obtained.

### [Polymer-dispersed polyol]

It is preferred that polymer particles are contained in composition (P). Such polymer particles are preferably dispersed in composition (P). Specifically, it is preferred that a polymer-dispersed polyol having polymer particles dispersed in a base polyol, is prepared, and such a polymer-dispersed polyol is incorporated to composition (P). Hereinafter, the polymer-dispersed polyol may be referred to also as polymer-dispersed polyol (W), and the base polyol for its production may be referred to also as base polyol (W').

One type of polymer-dispersed polyol (W) may be used alone, or two or more types of polymer-dispersed polyol (W) may be used in combination.

The polymer particles preferably have an outside diameter of at most 10µm. Here, measurement of the outside diameter of the polymer particles is carried out by Microtrac ultrafine particle size analyzer UPA-EX150, manufactured by Nikkiso Co., Ltd.

The content of the polymer particles in the entire composition (P) is preferably from 0.002 to 10 mass%, more preferably from 0.02 to 10 mass%, particularly preferably from 0.5 to 7 mass%. Within such a range, it is possible to effectively suppress shrinkage of a rigid foam obtainable while maintaining the heat-insulating property.

The hydroxy value of polymer-dispersed polyol (W) is preferably from 100 to 800 mgKOH/g, particularly preferably from 150 to 800 mgKOH/g. The hydroxy value of polymer-dispersed polyol (W) in this specification is a value obtained by measuring the hydroxy value with respect to a polyol having the polymer particles dispersed in base polyol (W').

When the hydroxy value of polymer-dispersed polyol (W) is at least the lower limit value within the above range, the compatibility with other polyols will be good, and when it is at most the upper limit value within the above range, the dispersion stability of the polymer particles will be good.

Polymer-dispersed polyol (W) is produced by a method wherein, in the presence of a solvent as the case requires, a monomer having a polymerizable unsaturated bond is polymerized in base polyol (W') to precipitate polymer particles. As the monomer having a polymerizable unsaturated bond to be used to form the polymer particles, a monomer having one polymerizable unsaturated bond is usually used, but the useful monomer is not limited thereto.

Specific examples of the monomer includes a cyano group-containing monomer such as acrylonitrile, methacrylonitrile or 2,4-dicyanobutene-1; a styrene type monomer such as styrene, α-methylstyrene or a halogenated styrene; an acryl type monomer such as acrylic acid, methacrylic acid or their alkyl esters, acrylamide, or methacrylamide; a vinyl ester type monomer such as vinyl acetate or vinyl propionate; isoprene, butadiene or other diene monomers; an unsaturated fatty acid ester such as a maleic acid diester or an itaconic acid diester; a vinyl halide such as vinyl chloride or vinyl bromide or vinyl fluoride; a vinylidene halide such as vinylidene chloride, vinylidene bromide or vinylidene fluoride; a vinyl ether type monomer such as methyl vinyl ether, ethyl vinyl ether or isopropyl vinyl ether; and other olefins and halogenated olefins.

Preferred is a combination of from 20 to 90 mass% of acrylonitrile and from 10 to 80 mass% of other monomer(s). As other monomer(s), preferred are styrene, an alkyl ester of acrylic acid, an alkyl ester of methacrylic acid and vinyl acetate. As such other monomers, two or more of them may be used in combination.

Further, other than the above-mentioned monomers, it is also preferred to use a fluorinated acrylate or a fluorinated methacrylate (hereinafter referred to also as a "fluorinated monomer"), as a part or whole of the monomer having a polymerizable unsaturated group. By using such a fluorinated monomer, the dispersion stability of the polymer particles in base polyol (W') will be better. Further, the compatibility of polymer-dispersed polyol (W) and other polyols will increase, whereby improvement in the dimensional stability and improvement in the heat insulation property of a rigid foam can be expected.

As a preferred example of the fluorinated monomer, a monomer represented by the following formula (1) may be mentioned.

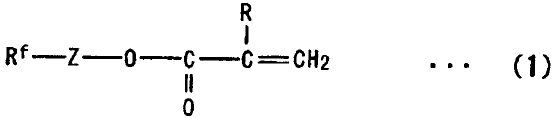

In the formula (1), R^{f} is a C₁₋₁₈ polyfluoroalkyl group. In R^{f}, the number of carbon atoms is from 1 to 18, preferably from 1 to 10, particularly preferably from 3 to 8.

As R^{f}, the proportion of fluorine atoms in the alkyl group (the proportion of the number of hydrogen atoms in the alkyl group, which are substituted by fluorine atoms) is preferably at least 80%, and it is particularly preferred that all hydrogen atoms are substituted by fluorine atoms. The number of carbon atoms is preferably at most 18, whereby at the time of foaming in the production of a rigid foam, the stability of the foam will be good.

R is a hydrogen atom or a methyl group.

Z is a bivalent linking group containing no fluorine atom, preferably a hydrocarbon group, and for example, an alkylene group or an arylene group may be mentioned, and an alkylene group is more preferred. Such an alkylene group is preferably a C₁₋₁₀ alkylene group, particularly preferably a C₁₋₅ alkylene group, and may be linear or branched. Here, Z and R^{f} in the formula (1) are to be separated so that the number of carbon atoms in R^{f} becomes small.

As specific examples for the monomer represented by the formula (1), compounds represented by the following formulae (1-1) to (1-3) may be mentioned.

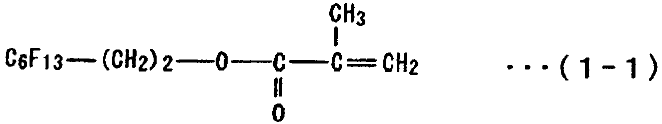

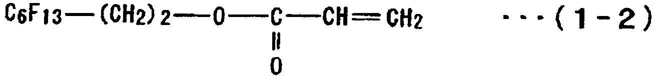

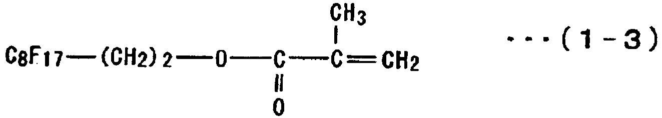

One type of the above fluorinated monomer may be used alone, or two or more types thereof may be used in combination.

In a case where the fluorinated monomer is used, its amount is preferably from 10 to 100 mass%, particularly preferably from 30 to 80 mass%, in the entire monomer having a polymerizable unsaturated group.

Particularly, in a case where the monomer represented by the formula (1) is used, it is preferably from 20 to 100 mass%, more preferably from 30 to 60 mass%, particularly preferably from 40 to 60 mass% in the entire monomer having a polymerizable unsaturated group.

When the monomer represented by the formula (1) is at least 20%, particularly at least 30%, a good heat insulating property can easily be obtained when a rigid foam is prepared.

In the case of using the fluorinated monomer, in addition to the monomer having a polymerizable unsaturated bond as mentioned above, a macromonomer may also be used in combination. The "macromonomer" is meant for a polymer or oligomer having a low molecular weight having a radical polymerizable unsaturated group at one terminal.

The total amount of monomers having polymerizable unsaturated bonds to be used for the formation of polymer particles, is not particularly limited, however, it is preferably such an amount that the content of the polymer particles in polymer-dispersed polyol (W) will be from about 1 to 50 mass%, more preferably from 2 to 45 mass%, particularly preferably from 5 to 30 mass%.

For polymerization of the monomer having a polymerizable unsaturated bond, a polymerization initiator of a type that initiates polymerization by forming free radicals, is preferably used. Specific examples of the polymerization initiator include 2,2'-azobis-isobutyronitrile (AIBN), 2,2'-azobis-2-methylbutyronitrile (AMBN), 2,2'-azobis-2,4-dimethylvaleronitrile, benzoyl peroxide, diisopropyl peroxycarbonate, acetyl peroxide, di-tert-butyl peroxide, a persulfate, etc. AMBN is particularly preferred.

Base polyol (W') may, for example, be a polyether polyol, a polyester polyol or a hydrocarbon type polymer having hydroxy groups at its terminals. Particularly, it may consists solely of a polyether polyol, or it is preferred that a polyether polyol is used as the main component and a small amount of e. g. a polyester polyol or a hydrocarbon type polymer having hydroxy groups at its terminal is used in combination.

The polyether polyol may, for example, be a polyether polyol obtainable by adding a cyclic ether such as an alkylene oxide to an initiator such as an amine or a polyhydroxy compound such as a polyhydric alcohol or a polyhydric phenol. The polyether polyol to be used as base polyol (W') may be the same as the above-mentioned polyol (A). Further, the polyester polyol to be used as base polyol (W') may be the same as the above-mentioned polyol (C).

At least 5 mass% of base polyol (W') is preferably the following polyether polyol (X). Polyether polyol (X) is meant for one having a hydroxy value of 84 mgKOH/g and an oxyethylene group content of at least 40 mass% based on the entire polyether polyol (X).

Polyether polyol (X) is preferably one obtainable by adding ethylene oxide, or ethylene oxide and other cyclic ether(s), to a polyhydric alcohol as an initiator. As the polyhydric alcohol, glycerin, trimethylolpropane or 1,2,6-hexanetriol is, for example, preferred. As other cyclic ether(s), propylene oxide, isobutylene oxide, 1-butene oxide and 2-butene oxide are preferred, and propylene oxide is particularly preferred.

When polyether polyol (X) has a hydroxy value of at most 84 mgKOH/g, it tends to be easy to obtain polymer-dispersed polyol (W) having polymer particles stably dispersed therein. The hydroxy value of polyether polyol (X) is preferably at most 67 mgKOH/g, particularly preferably at most 60 mgKOH/g. The lower limit of the hydroxy value of polyether polyol (X) is preferably at least 5 mgKOH/g, more preferably at least 8 mgKOH/g, further preferably at least 20 mgKOH/g, particularly preferably at least 30 mgKOH/g, from the viewpoint of the dispersion stability of the polymer particles.

In polyether polyol (X), when the oxyethylene group content in the entire polyether polyol (X) is at least 40 mass%, the dispersion of the polymer particles in polymer-dispersed polyol (W) tends to be stabilized. The oxyethylene group content is more preferably at least 50 mass%, further preferably at least 55 mass%. The upper limit of polyether polyol (X) may be about 100 mass%, i.e. polyether polyol (X) having only EO added to the initiator. From the viewpoint of the dispersion stability of the polymer particles, the oxyethylene group content is particularly preferably at most 90 mass%.

When the content of polyether polyol (X) in base polyol (W') is at least 5 mass%, polymer-dispersed polyol (W) having good dispersibility tends to be readily obtainable. The content of polyether polyol (X) is more preferably at least 10 mass%. The upper limit of the content of polyether polyol (X) is not particularly restricted, but is preferably set so that the hydroxy value of the entire polymer-dispersed polyol (W) becomes to be within the above-mentioned preferred range.

At least 10 mass% of base polyol (W') is preferably a polyether polyol having a hydroxy value of from 400 to 850 mgKOH/g (hereinafter referred to as polyether polyol (Z)).

As polyether polyol (Z), it is possible to use one having a hydroxy value of from 400 to 850 mgKOH/g among polyether polyols included in the above-mentioned base polyol (W'). Among them, preferred is one obtainable by adding propylene oxide to an amine or a polyhydric alcohol as an initiator.

The hydroxy value of polyol (Z) is more preferably from 400 to 800 mgKOH/g.

Base polyol (W') is preferably a mixture comprising from 5 to 90 mass% of the above-mentioned polyether polyol (X) and from 10 to 95 mass% of the above-mentioned polyether polyol (Z), more preferably a mixture comprising from 30 to 80 mass% of polyether polyol (X) and from 20 to 70 mass% of polyether polyol (Z).

In a case where polymer-dispersed polyol (W) is incorporated in composition (P), its content is set so that the content of the polymer particles in the entire composition (P) becomes within the above-mentioned preferred range. For example, the content of polymer-dispersed polyol (W) in the entire composition (P) is preferably from 0.01 to 20 mass%, particularly preferably from 0.1 to 20 mass%.

### [Another polyol (D)]

To composition (P), another polyol (D) may be incorporated which does not belong to polyol (A), polyol (C) or polymer-dispersed polyol (W).

Polyol (D) may, for example, be a polyether polyol, a polyester polyol, a polycarbonate polyol or an acryl polyol. The hydroxy value of polyol (D) is preferably from 10 to 600 mgKOH/g. In a case where a plurality of polyols are used in combination as polyol (D), the hydroxy value of each polyol may be in the above range.

The content of polyol (D) in the entire composition (P) is preferably at most 25 mass%, particularly preferably at most 20 mass%.

The hydroxy value of the entire composition (P) is preferably from 100 to 450 mgKOH/g, particularly preferably from 150 to 350 mgKOH/g. When the hydroxy value of the entire composition (P) is within the above range, the strength of the obtainable rigid foam will be sufficiently high, such being desirable.

Composition (P) contains polyol (A) and may optionally contain polyol (C), (W) and/or (D). Composition (P) may further contain a component having a function to reduce the viscosity.

As composition (P) to be used for a spray method, the following combination is preferred.

Polyol (A) is contained in an amount of from 1 to 80 mass% of the entire composition (P),

Polyol (C) is contained in an amount of from 1 to 80 mass% of the entire composition (P), and

Polyol (W) is contained in an amount of from 1 to 50 mass% of the entire composition (P).

A particularly preferred combination is as follows.

Polyol (A) is contained in an amount of from 20 to 70 mass% of the entire composition (P),

Polyol (C) is contained in an amount of from 20 to 70 mass% of the entire composition (P), and

Polyol (W) is contained in an amount of from 5 to 30 mass% of the entire composition (P).

### [Polyisocyanate compound (I)]

Polyisocyanate compound (I) includes, for example, aromatic, alicyclic and aliphatic polyisocyanates having at least two isocyanate groups; and modified polyisocyantes obtainable by modifying them.

Specific examples include polyisocyanates such as tolylene diisocyanate (TDI), diphenylmethane diisocyanate (MDI), polymethylenepolyphenyl polyisocyanate (popular name: crude MDI), xylylene diisocyanate (XDI), isophorone diisocyanate (IPDI) and hexamethylene diisocyanate, or their prepolymer type modified products, isocyanurates, urea-modified products, carbodiimides, etc. Among them, crude MDI or its modified product is preferred, and the modified product of crude MDI is particularly preferred. One type of polyisocyanate compound (I) may be used alone, or two or more types thereof may be used as mixed.

Usually polyisocyanate compound (I) is liquid. The viscosity at 25°C of polyisocyanate compound (I) is preferably from 50 to 450 mPa·s. Within this viscosity range, shrinkage is less likely to occur in the obtainable rigid foam. Further, the operation efficiency during the spray forming by means of a spray method becomes good, and it is possible to maintain the appearance of the obtainable rigid foam to be good.

The amount of polyisocyanate compound (I) to be used, is preferably from 50 to 300, as represented by 100 times the number of isocyanate groups to the total number of active hydrogen in composition (P) and other active hydrogen compounds present in the reaction system (the numerical value as represented by such 100 times will be referred to as an "isocyanate index").

Particularly, in the case of a urethane prescription wherein a urethane-forming catalyst is mainly used as a catalyst, the amount of polyisocyanate compound (I) to be used, is preferably from 50 to 170, particularly preferably from 70 to 150, by the isocyanate index.

Further, in the case of an isocyanurate prescription wherein a catalyst to accelerate a trimerization reaction of isocyanate groups is mainly used as a catalyst, the amount of polyisocyanate compound (I) to be used, is preferably from 100 to 350, more preferably from 100 to 300, particularly preferably from 100 to 180, by the isocyanate index.

### [Catalyst]

The catalyst is preferably a tertiary amine as a urethane-forming catalyst, and preferably a metal salt other than tin salt, lead salt and mercury salt, and/or a quaternary ammonium salt, as a catalyst to accelerate the trimerization reaction. In the case of the isocyanurate prescription, it is preferred to use the urethane-forming catalyst and the trimerization reaction-accelerating catalyst in combination, and it is more preferred to use a tertiary amine and the above metal salt and/or a quaternary ammonium salt in combination.

The tertiary amine includes, for example, tertiary amine compounds such as N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylguanidine, 1,3,5-tris(N,N-dimethylaminopropyl)hexahydro-S-triazine, 1,8-diazabicyclo[5.4.0]undecene-7, triethylenediamine, N,N,N',N'-tetramethylhexamethylenediamine, N,N'-dimethylpiperazine, dimethylcyclohexylamine, N-methylmorpholine, N-ethylmorpholine, bis(2-dimethylaminoethyl) ether, 1-methyl imidazole, 1,2-dimethyl imidazole, 1-isobutyl-2-methyl imidazole, 1-dimethylaminopropyl imidazole and N-methyl-N-(N,N-dimethylaminoethyl)ethanolamine. Among them, bis(2-dimethylaminoethyl) ether is preferred from such a viewpoint that an odor to be formed during foaming is less.

The metal salt other than tin salt, lead salt and mercury salt, may, for example, be preferably a metal carboxylate such as potassium acetate, potassium 2-ethylhexanoate or bismuth 2-ethylhexanoate. In a spray method, potassium 2-ethylhexanoate is preferred in that the cost is low, and the catalytic activity is excellent.

The quaternary ammonium salt may, for example, be a tetraalkylammonium halide such as tetramethylammonium chloride; a tetraalkylammonium hydroxide such as tetramethylammonium hydroxide; a tetraalkylammonium organic acid salt such as tetramethylammonium 2-ethylhexanoate, 2-hydroxypropyltrimethylammonium formate or 2-hydroxypropyltrimethylammonium 2-ethylhexanoate; or a quaternary ammonium compound obtainable by subjecting a quaternary ammonium carbonate obtainable by reacting a tertiary amine such as N,N,N',N'-tetramethylethylenediamine with a carbonic acid diester, to an anion-exchange reaction with 2-ethylhexanoic acid.

The amount of the catalyst is preferably such that the total amount of catalysts is from 0.1 to 20 parts by mass per 100 parts by mass of composition (P).

Further, by adjusting the amount of the catalyst, it is possible to adjust the time (cream time) from the initiation of mixing of composition (P) with a polyisocyanate compound (I), a blowing agent and a foam stabilizer to the start of the reaction as visually observed, and the time (rise time) until the foaming is completed.

### [Blowing agent]

As the blowing agent, a conventional one may be used. However, with a view to reducing the environmental load, it is preferred to use water as a part or whole of the blowing agent, and it is more preferred to use water alone as whole of the blowing agent.

In a case where water is used as a part of the blowing agent, it is preferred to use water and air or an inert gas (such as carbon dioxide or nitrogen) in combination. Further, a fluorinated compound or hydrocarbon compound having a low boiling point may be used in combination.

The fluorinated compound having a low boiling point may, for example, be 1,1,1,2-tetrafluoroethane (HFC-134a), 1,1,1,3,3-pentafluoropropane (HFC-245fa), 1,1,1,3,3-pentafluorobutane (HFC-365mfc), 1,1,2,2-teterafluoroethyl difluoromethyl ether (HFE-236pc), 1,1,2,2-teterafluoroethyl methyl ether (HFE-254pc) or 1,1,1,2,2,3,3-heptafluoropropyl methyl ether (HFE-347mcc). Among them, HFC-134a, HFC-245fa and HFC-365mfc are preferred.

The hydrocarbon compound may, for example, be butane, n-pentane, iso-pentane, cyclopentane, hexane or cyclohexane.

In a case where a blowing agent other than water is to be used, one type may be used alone, or two or more types may be used in combination.

The amount of water to be used as a blowing agent is preferably from 0.5 to 10 parts by mass, particularly preferably from 0.5 to 7 parts by mass, per 100 parts by mass of composition (P).

The amount of the fluorinated compound having a low molecular weight to be used as a blowing agent is preferably from 0 to 60 parts by mass, particularly preferably from 5 to 45 parts by mass, per 100 parts by mass of composition (P). The amount of pentane (n-pentane, iso-pentane and/or cyclopentane) to be used as a blowing agent is preferably from 0.5 to 40 parts by mass, particularly preferably from 0.5 to 30 parts by mass, per 100 parts by mass of composition (P).

### [Foam stabilizer]

In the present invention, a foam stabilizer is used to form a good foam. The foam stabilizer may, for example, be a silicone type foam stabilizer or a fluorinated compound type foam stabilizer. Commercial products of such foam stabilizers may be used. The amount of the foam stabilizer to be used, may suitably selected for use, but it is preferably from 0.1 to 10 parts by mass per 100 parts by mass of composition (P).

### [Other additives]

In the present invention, optional additives may be used in addition to the above-described composition (P), polyisocyanate compound (I), catalyst, blowing agent and foam stabilizer. The additives include a filler such as calcium carbonate or barium sulfate; an anti-aging agent such as an anti-oxidant or a ultra-violet absorber; a flame retardant, a plasticizer, a coloring agent, a fungicide, a defoaming agent, a dispersing agent, a discoloration-preventing agent, etc.

### [Reaction/foaming step]

The reaction/foaming step is preferably a method wherein a polyol system liquid containing composition (P) and the blowing agent, and a liquid containing polyisocyanate compound (I), are, respectively, prepared, and they are mixed and reacted. The foam stabilizer and the catalyst may be contained in either the polyol system liquid or the liquid containing polyisocyanate compound (I). With a view to avoiding a problem such as separation of the polyol system liquid i.e. attaining stabilized performance, it is preferred that the foam stabilizer and the catalyst are contained in the polyol system liquid.

According to the present invention, the viscosity of polyol (A) can be made low, whereby the viscosity of composition (P) can be made low, and it is possible to obtain a polyol system liquid having a low viscosity. For example, it is possible to obtain a polyol system liquid having a viscosity at 25°C of at most 500 mPa·s, preferably at most 450 mPa·s.

The lower limit value of the viscosity of the polyol system liquid is not particularly limited, but from the viewpoint of the strength of the obtainable rigid foam, it is preferably at least 100 mPa·s, more preferably at least 150 mPa·s.

By lowering the viscosity of the polyol system liquid, it is possible to improve its mixing performance with polyisocyanate compound (I) and to improve the planarity when a rigid foam is formed by a spray method.

Particularly in the case of using a spray method, it is preferred to minimize the difference in viscosity between the polyol system liquid and the liquid containing polyisocyanate compound (I) in order to prevent clogging of a spray gun as the mixing device or to prevent an abnormal variation of the mixing ratio. As the preferred viscosity at 25°C of the liquid containing polyisocyanate compound (I) is from 50 to 450 mPa·s, also the viscosity at 25°C of the polyol system liquid is preferably from 50 to 450 mPa·s.

### [Working method]

The method for producing a rigid foam of the present invention is suitable for a working method as the viscosity of the polyol system liquid is low, and it is particularly suitable for a spray method.

The spray method is a foaming method wherein firstly a polyol system liquid containing composition (P), a blowing agent and optional additives such as a foam stabilizer, a catalyst, etc., is prepared, and such a polyol system liquid and a liquid containing polyisocyanate compound (I) are sprayed and reacted on a working surface.

By the spray method, a rigid foam can be formed directly at the construction site, and thus, the spray method has such merits that the construction costs can be reduced, working can be done without void spaces even on a working surface having irregularities, and a multi-layered rigid foam can be formed. Thus, the spray method is suitable for application to building, construction and housing and is suitably employed in many cases at the time of applying a heat-insulating material of a rigid foam to a wall, ceiling, etc. at a building site. As a specific working example, a heat-insulating material for condominium buildings, office buildings, prefabricated cold storage warehouses, etc. may be mentioned. The method of the present invention is particularly suitable for applying a heat-insulating material to condominium buildings, office buildings, etc.

As the spray method, various methods are known. However, particularly preferred is an airless spray method wherein the polyol system liquid and the liquid containing polyisocyanate compound (I) are mixed for foaming by a mixing head. The temperature of the mixed liquid in the mixing head is preferably from 30 to 50°C. If the temperature of the mixed liquid is too high, the foaming reaction tends to proceed abruptly, whereby the balance with a resinifying reaction is likely to be collapsed. Consequently, the foaming stress becomes dominant, and a trouble such as peeling from the substrate surface is likely to occur.

Further, the method of the present invention may be applied to a method other than a spray method. For example, it may be used for a continuous board-forming method or an injection method. Particularly in e.g. a molding method by injection to a sash portion of e.g. a bay window, as the viscosity of the polyol system liquid is low, it is possible to obtain good operation efficiency and working performance, and it is possible to produce a rigid foam excellent in strength and dimensional stability.

### <Rigid foam synthetic resin (rigid foam)>

The density (core density) of a rigid foam (rigid foam synthetic resin) produced by the method of the present invention is preferably from 15 to 60 kg/m³, more preferably from 20 to 50 kg/m³, as a value obtainable by a measuring method in accordance with JIS A 9526. Such a rigid foam density (core density) can be adjusted by the amount of the blowing agent, and it is possible to make it light by using the blowing agent in a large amount. In a case where water is used as the blowing agent, from the viewpoint of the mixing property of the polyol system liquid and isocyanate compound (I) or from such a viewpoint that in the spray method, the polyol system liquid and isocyanate compound (I) are mixed in a volume ratio of 1:1 in many cases, a preferred amount of water to be used, is limited.

In the present invention, by using polyol (A), it is possible to form a rigid foam which is excellent in the strength and dimensional stability and which is also excellent in the moldability and processability, within the above range of the rigid foam density (core density).

According to the present invention, it is possible to obtain polyol (A) having a low viscosity and little odor, and by using such polyol (A), it is possible to obtain polyol composition (P) having a low viscosity and little odor. And, a rigid foam produced by using such polyol composition (P) has little odor and good compression strength.

Since polyol (A) has a low viscosity, particularly in a case where water is used as a blowing agent, it is possible to suppress an increase in the viscosity of the polyol system liquid and to obtain a good working performance and operation efficiency. Further, it is possible to reduce the difference in viscosity between the polyol system liquid and the liquid containing polyisocyanate compound (I), whereby the mixing property of both will be improved, and a rigid foam excellent in the strength, dimensional stability and heat-insulating property can be obtained.

Especially in a spray method, as the viscosity of the polyol system liquid is reduced, the state of mist in the spraying will be refined, and a so-called mist pattern will have a wide angle, whereby uniform spraying will be facilitated, and the surface smoothness will be good. Further, the wettability with the sprayed surface will be good, whereby the adhesive strength will be improved.

Further, polyol (A) is a polyol prepared by using a Mannich condensate as the initiator, whereby it is possible to secure good flame retardancy for a rigid foam. Especially in a spray method, it is preferred that the flame retardancy of a rigid foam is high, from the viewpoint of fire-safety as a building material or prevention of a fire trouble due to welding sparks at a working site.

### EXAMPLES

Now, the present invention will be described in detail with reference to Examples, but it should be understood that the present invention is by no means restricted by these Examples. In the following, "%" means "mass%" unless otherwise specified.

### <Production of polyol (A)>

Polyol (A) containing a Mannich condensate was produced. Ex. 1 to 4 are Examples of the present invention, and Ex. 5 to 9 are Comparative Examples.

### [Ex. 1: Production of polyol A1]

For the production of polyol (A), a 5L high-pressure reactor was prepared. This reactor is equipped with a jacket for heat exchange, a thermometer, a pressure meter, a vacuum stripping device, a stirrer, an alkylene oxide-supply tank, a nitrogen-introducing tube and a raw material inlet.

In the blend ratio as shown in Table 1, nonyl phenol and diethanolamine were charged and mixed, and then, 1/3 of the total amount of formaldehyde was added and reacted at 70°C for 0.5 hour and then the rest of formaldehyde was added and further reacted for 30 minutes. The reaction temperature was changed to 120°C, followed by a reaction at 120°C for 3 hours. Then, the pressure was reduced to 11 kPa at 120°C to carry out dehydration (Step for synthesis of Mannich condensate). The water content at that time was 1.0%.

Then, nitrogen was introduced, and the pressure in the reactor was adjusted to 0 MPa. While maintaining the temperature at 120°C, propylene oxide was added in an amount corresponding to 3 mol per 1 mol of nonyl phenol, followed by a reaction at 120°C for 0.5 hour. Then, the reaction temperature was raised to 130°C, and propylene oxide was reacted completely (i.e. until the pressure became no longer changed) (first step). For this reaction, 1.5 hours were required.

Then, in the second step, an alkylene oxide was reacted in two stages. Firstly, from the raw material inlet of the reactor adjusted to 130°C under 0 MPa, an aqueous potassium hydroxide solution (concentration: 48%) was added in an amount of 0.15% to the final polyol amount, and then, the pressure was reduced to 1.3 kPa at 130°C, followed by dehydration for 0.5 hour. The water content at that time was 0.05%. Then, in the reaction process in the first stage, under a condition of 130°C, propylene oxide was added in an amount corresponding to 2.5 mol per 1 mol of nonyl phenol and reacted for 3 hours, and further, in the reaction process in the second stage, ethylene oxide was added in an amount corresponding to 10 mol per 1 mol of nonyl phenol and reacted for 1 hour (second step). The proportion of EO in the total amount of PO and EO added to the initiator (as shown by "EO/(EO+PO)" in Table) is shown in Table 1 (the same applies hereinafter). Thereafter, in a usual manner, neutralization was carried out with an acid, followed by dehydration under reduced pressure and then by filtration to obtain polyol A1.

The hydroxy value (unit: mgKOH/g), the viscosity (unit: mPa·s) and the primary ratio of terminal hydroxy groups (unit:%) of the obtained polyol, are shown in Table 1 (the same applies hereinafter). The viscosity of the polyol was measured in accordance with JIS K 1557-5 at a measuring temperature of 25°C.

Further, the odor of the polyol was evaluated by sensory analysis. That is, the odor of a sample of the obtained polyol was sniffed by 5 panelists, and the number of panelists who felt bad-smelling was investigated. The results are shown in Table 1 by the following evaluation standards (the same applies hereinafter).
1: The number of panelists who felt bad-smelling is 1.
2: The number of panelists who felt bad-smelling is 2.
3: The number of panelists who felt bad-smelling is 3.
4: The number of panelists who felt bad-smelling is 4.
5: The number of panelists who felt bad-smelling is 5.

### [Ex. 2 and 7: Production of polyols A2 and A7]

Polyols A2 and A7 were, respectively, produced in the same manner as in Ex. 1 except that the blend ratio and the conditions for the ring opening addition reaction of an alkylene oxide were changed as shown in Table 1.

In Ex. 2 and 7, in the second step, the alkylene oxide was reacted in one stage. That is, under conditions of 130°C and 0 kPa, ethylene oxide was added in the amount as shown in Table 1 and reacted for 4 hours (second step).

### [Ex. 3 and 4: Production of polyols A3 and A4]

Polyols A3 and A4 were, respectively, produced in the same manner as in Ex. 1 except that the blend ratio was changed as shown in Table 1.

### [Ex. 5 and 6: Production of polyols A5 and A6]

Polyols A5 and A6 were, respectively, produced in the same manner as in Ex. 1 except that the blend ratio and the conditions for the ring opening addition reaction of an alkylene oxide were changed as shown in Table 1.

In Ex. 5 and 6, in the second step, the alkylene oxide was reacted in one stage. That is, under conditions of 130°C and 0 kPa, propylene oxide was added in an amount corresponding to 11 mol per 1 mol of nonyl phenol and reacted for 4 hours (second step).

### [Ex. 8: Production of polyol A8]

In this Example, polyol A8 was produced by a method wherein the first step was not carried out.

That is, the step for synthesis of a Mannich condensate was carried out in the same manner as in Ex. 1. Then, without carrying out the first step, while maintaining 130°C and 0 kPa, potassium hydroxide was added in an amount of 0.15% to the final polyol amount. Then, under conditions of 130°C and 0 kPa, ethylene oxide was added in an amount corresponding to 17.6 mol per 1 mol of nonyl phenol, and reacted for 4 hours. The reaction process in the second stage was not carried out (second step).

The subsequent process was carried out in the same manner as in Ex. 1, to obtain polyol A8.

### [Ex. 9: Production of polyol A9]

In this Example, polyol A9 was produced by a method wherein the first step was not carried out.

That is, the step for synthesis of a Mannich condensate was carried out in the same manner as in Ex. 1. Then, without carrying out the first step, while maintaining 130°C and 0 kPa, potassium hydroxide was added in an amount of 0.15% to the final polyol amount. Then, under conditions of 130°C and 0 kPa, propylene oxide was added in an amount corresponding to 5.5 mol per 1 mol of nonyl phenol, and reacted for 4 hours. In the second step, the alkylene oxide was reacted in one stage. That is, under conditions of 130°C and 0 kPa, ethylene oxide was added in an amount corresponding to 10 mol per 1 mol of nonyl phenol, and reacted for 4 hours (second step).

**TABLE 1**

| | | | Unit | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Initiator | Phenol | Nonyl phenol | (mol) | 1 | 1 | 1 | 1 | 1 | 1 | 1 | 1 | 1 |
| | Aldehyde | Formaldehyde | (mol) | 1.5 | 0.75 | 0.75 | 0.75 | 1.5 | 1.5 | 1.5 | 1.5 | 1.5 |
| | Alkanolamine | Diethanolamine | (mol) | 2.2 | 2.2 | 2.2 | 2.2 | 2.2 | 2.2 | 2.2 | 2.2 | 2.2 |
| Alkylene oxide | First step (no catalyst added) | | (mol) | PO 3 | PO 3 | PO 3 | PO 3 | PO 3 | EO 3 | EO 3 | - | - |
| | Second step (after addition of catalyst) | First stage | (mol) | PO 2.5 | EO 15 | PO 3.5 | PO 9 | PO 11 | PO 11 | EO 14.6 | EO 17.6 | PO 5.5 |
| | | Second stage | (mol) | EO 10 | - | EO 10 | EO 3 | - | - | - | - | EO 10 |
| | EO/(PO+EO) | | (mol%) | 64.5 | 83.3 | 60.6 | 20.0 | 0 | 21.4 | 100 | 100 | 64.5 |
| Polyol (A) | Polyol odor | | Sensory evaluation | 2 | 2 | 2 | 1 | 1 | 5 | 5 | 5 | 3 |
| | Hydroxy value | | (mgKOH/g) | 305 | 300 | 300 | 290 | 300 | 300 | 300 | 300 | 305 |
| | Viscosity | | (mPa·s) | 1,100 | 440 | 500 | 610 | 2,500 | 2,000 | 400 | 400 | 1,800 |
| | Primary ratio of terminal hydroxy groups | | (%) | 90 | 95 | 93 | 96 | 0 | 15 | 100 | 100 | 91 |
| Name of polyol (A) | | | | A1 | A2 | A3 | A4 | A5 | A6 | A7 | A8 | A9 |

As shown by the results in Table 1, in each of Ex. 1 to 4, polyol (A) having a low viscosity and little odor was obtained. Especially in each of Ex. 2 to 4 wherein the proportion of formaldehyde used to nonyl phenol was small at the time of synthesizing the Mannich condensate as an initiator, polyol (A) having a lower viscosity than Ex. 1 was obtained. Further, among Ex. 2 to 4, such a tendency is observed that as the proportion of EO/(PO+EO) is higher, the viscosity of polyol (A) becomes lower.

On the other hand, in Ex. 5 wherein EO was not used in the second step, the viscosity of the obtained polyol was higher than any one of Ex. 1 to 4.

In Ex. 6 and 7 wherein in the first step, not PO but EO was used, the odor of the obtained polyols was strong.

In Ex. 8 wherein without carrying out the first step, EO was added by ring-opening addition to the initiator in the presence of a catalyst, the odor was particularly strong to such an extent that the worker felt uncomfortable in handling the polyol.

In Ex. 9, PO was added by ring opening addition to the initiator by using a catalyst, whereby the viscosity of the obtained polyol was high.

Using polyol (A) obtained, a rigid foam was produced. Raw materials used in addition to polyol (A) are as follows.

### <Polyol (C)>

### [Polyol C1]

A polyester polyol having a hydroxy value of 315 mgKOH/g, obtained by polycondensation of diethylene glycol and phthalic anhydride.

### <Polymer-dispersed polyol (W)>

As polymer-dispersed polyol (W), polymer-dispersed polyols W-1 to W-6 were used which were produced by the following method in the blend ratios shown in Table 2. The unit of the blend ratios in Table 2 is "mass%".

### [Monomer having polymerizable unsaturated bond]

As the monomer having a polymerizable unsaturated bond to form polymer particles, acrylonitrile (AN), vinyl acetate (Vac), methyl methacrylate (MMA) and methyl perfluoromethacrylate (FMA) were used.

### [Base polyol (W')]

As base polyol (W'), a mixture of the following polyols X1, Z1 and Z2, was used.

### (Polyol X1)

A polyether polyol having a hydroxy value of 50 mgKOH/g, obtained by ring opening addition of a mixture of PO and EO to glycerin as an initiator. The proportion of EO in the total amount of PO and EO added, is 70 mass%. The content of oxyethylene groups in the entire polyol X1 is 68 mass%.

### (Polyol Z1)

A polyether polyol having a hydroxy value of 650 mgKOH/g, obtained by ring opening addition of PO to glycerin as an initiator.

### (Polyol Z2)

A polyether polyol having a hydroxy value of 760 mgKOH/g, obtained by ring opening addition of PO to ethylenediamine as an initiator.

### [Macromer]

As the macromer, the following macromonomer M1 and macromonomer M2 were used.

### (Macromonomer M1)

A macromonomer having a polymerizable unsaturated group and a hydroxy value of 40 mgKOH/g, obtained by charging the following polyol R, toluene diisocyanate (trade name: T-80, manufactured by Nippon Polyurethane Industry Co., Ltd.) and 2-hydroxyethyl methacrylate (manufactured by Junsei Chemical Co., Ltd.) in a molar ratio of polyol R/toluene diisocyanate/2-hydroxyethyl methacrylate=1/1/1, followed by a reaction at 60°C for 1 hour and then by a reaction at 80°C for 6 hours.

Polyol R: a polyoxyalkylene polyol having a hydroxy value of 48 mgKOH/g and an oxyethylene group-content of 65 mass% in polyol R, obtained by addition-polymerizing ethylene oxide to glycerin used as an initiator, followed by addition-polymerizing a mixture of propylene oxide and ethylene oxide [PO/EO=46.2/53.8 (mass ratio)].

### (Macromonomer M2)

A macromonomer having a polymerizable unsaturated group and a hydroxy value of 21 mgKOH/g, obtained by charging the following polyol S, toluene diisocyanate (trade name: T-80, manufactured by Nippon Polyurethane Industry Co., Ltd.) and 2-hydroxyethyl methacrylate (manufactured by Junsei Chemical Co., Ltd.) in a molar ratio of polyol S/toluene diisocyanate/2-hydroxyethyl methacrylate=1/1/1, followed by a reaction at 60°C for 1 hour and then by a reaction at 80°C for 6 hours.

Polyol S: a polyoxyalkylene polyol having a hydroxy value of 28 mgKOH/g and an oxyethylene group-content of 60 mass% in polyol S, obtained by addition-polymerizing ethylene oxide to glycerin used as an initiator, followed by addition-polymerizing a mixture of propylene oxide and ethylene oxide [PO/EO=48.0/52.0 (mass ratio)].

### [Ex. 11: Production of polymer-dispersed polyol W1]

Into a 5L pressure reaction vessel, base polyol (W'), the monomer and AMBN as a polymerization initiator were all charged in the blend ratio as shown in Table 2, then the temperature raise was initiated with stirring, and while maintaining the reaction liquid at 80°C, a reaction was carried out for 10 hours. The reaction rate of the monomer was at least 80%. After the reaction, heating and deaeration under reduced pressure were carried out at 110°C under 20 Pa for 2 hours to remove an unreacted monomer and to obtain polymer-dispersed polyol W 1.

The hydroxy value and viscosity at 25°C of the obtained polymer-dispersed polyol W1, and the content of polymer particles in polymer-dispersed polyol W1, are shown in Table 2 (the same applies hereinafter).

### [Ex. 12 and 13: Production of polymer-dispersed polyols W2 and W3]

Into a 5L pressure reaction vessel, 70 mass% of the mixture of base polyol (W') as shown in Table 2 was charged, and while maintaining the temperature at 120°C, the rest of the mixture of base polyol (W') and a mixture of the monomer and AMBN were fed over 2 hours with stirring. After completion of all the feeding, stirring was continued at the same temperature for about 0.5 hour. The reaction rate of the monomer was at least 80%. After completion of the reaction, heating and deaeration under reduced pressure were carried out at 120°C under 20 Pa for 2 hours to remove an unreacted monomer and to obtain polymer-dispersed polyol W2 or W3.

### [Ex. 14 to 16: Production of polymer-dispersed polyols W4, W5 and W6]

Into a 5L pressure reaction vessel, polyol X, polyol Z1 and the macromonomer were charged in the blend ratio as shown in Table 2, and while maintaining the temperature at 120°C, a mixture of the monomer and AMBN was fed over 2 hours with stirring. After completion of all feeding, stirring was continued at the same temperature for 0.5 hour. Thereafter, heating and deaeration under reduced pressure were carried out under reduced pressure at 120°C for 3 hours to remove an unreacted monomer and to obtain polymer-dispersed polyol W4, W5 or W6.

**TABLE 2**

| | | Ex. 11 | Ex. 12 | Ex. 13 | Ex. 14 | Ex. 15 | Ex. 16 |
|---|---|---|---|---|---|---|---|
| Base polyol (W') | Polyol X1 | 900 | 1,420 | 900 | 1,575 | 1,350 | 1,350 |
| | Polyol Z1 | 900 | 830 | 1,125 | 675 | 900 | 900 |
| | Polyol Z2 | 450 | | 225 | | | |
| Monomer | AN | 150 | 400 | 400 | | | 187.5 |
| | Vac | 600 | | | 450 | 450 | |
| | MMA | | 350 | 350 | | | |
| | FMA | | | | 300 | 300 | 187.5 |
| Polymerization initiator (AMBN) | | 30 | 30 | 30 | 14.2 | 14.2 | 14.2 |
| Macromonomer | Macromonomer M1 | | | | 28.5 | 28.5 | |
| | Macromonomer M2 | | | | | | 28.5 |
| Content of polymer particles (mass%) | | 25 | 25 | 25 | 20 | 20 | 10 |
| Hydroxy value (mgKOH/g) | | 330 | 335 | 335 | 192 | 247 | 267 |
| Viscosity (mPa·s) | | 1,500 | 2,600 | 2,600 | 1,700 | 1,600 | 1,300 |
| Name of polymer-dispersed polyol | | W1 | W2 | W3 | W4 | W5 | W6 |

### <Flame retardant>

Trischloropropyl phosphate (trade name: FYROL PCF, manufactured by Supresta Japan Co., Ltd.)

### <Foam stabilizer>

Silicone type foam stabilizer (trade name: SH-193, manufactured by Toray-Dow Corning Silicone Co., Ltd.)

### <Catalyst>

[Catalyst A] Resinifying catalyst (N,N,N',N'-tetramethylhexamethylenediamine, trade name: TOYOCAT MR, manufactured by Tosoh Corporation)
[Catalyst B] Reactive foaming catalyst (70 mass % DPG (dipropylene glycol) solution of bis-(2-dimethylaminoethyl) ether, trade name: TOYOCAT RX-7, manufactured by Tosoh Corporation)
[Catalyst C] Triazine type isocyanurate-forming catalyst (trade name: POLYCAT 41, manufactured by Air Products Industry Co., Ltd.)
[Catalyst D] A mixture of a quaternary ammonium salt and ethylene glycol (trade name: TOYOCAT TRX, manufactured by Tosoh Corporation)

### <Blowing agent> Water

### <Polyisocyanate compound (I)>

Polymeric MDI (mixture of MDI and crude MDI, trade name: Coronate 1130, manufactured by Nippon Polyurethane Co., Ltd., viscosity at 25°C: 130 mPa·s, isocyanate group content: 31 mass%)

### <Ex. 21 to 24: Production of rigid foams>

In the blend ratio as shown in Table 3, a polyol system liquid was prepared by using polyol (A) produced in each of Ex. 1 to 4, and by using it and polyisocyanate compound (I), a rigid foam was produced and evaluated by the following methods. The unit of the blend ratio shown in Table 3 is "parts by mass".

Ex. 21 to 24 are Examples of the present invention.

The polyol system liquid was prepared by adding and mixing the catalyst, the foam stabilizer and the flame retardant to composition (P) composed of a mixture of polyol (A) and polymer-dispersed polyol (W), and water as a blowing agent. As the blowing agent, only water was used.

The amount of the catalyst to be added, was set to be such an amount that the after-mentioned gel time would be at most 16 seconds.

Further, the amounts of the polyol system liquid and polyisocyanate compound (I) to be used for the production of a rigid foam were adjusted to be 1/1 by volume ratio. The isocyanate index and amount (unit: parts by mass) of polyisocyanate compound (I) used at that time are shown in Table 3.

### [Simplified foaming test]

The polyol system liquid and the polyisocyanate compound were adjusted to 10°C, quickly put into a polyethylene cup and stirred at a rotational speed of 3,000 rpm for 3 second for foaming in the 2L cup.

The reactivity and core density of the rigid foam were evaluated by the following methods. The evaluation results are shown in Table 3.

### (Evaluation methods)

### (Cream time, rise time and tack-free time)

The time at the initiation of mixing the polyol system liquid and the polyisocyanate compound is taken as 0 second, the period of time until the mixed liquid starts to foam is taken as a cream time (seconds), and the period of time from the start of foaming to the end of rising of the foam is taken as a rise time (seconds).

The time at the initiation of mixing the polyol system liquid and the polyisocyanate compound is taken as 0 second, and the period of time until the foaming is completed and tackiness has disappeared, is measured as a tack-free time.

### (Evaluation of reactivity)

Based on the amount of the catalyst required to bring the gel time to at most 16 seconds, the reactivity was evaluated by the following standards. The smaller the amount of the catalyst, the higher the reactivity.
1: The amount of the catalyst is at most 2 parts by mass per 100 parts by mass of composition (P).
2: The amount of the catalyst is more than 2 parts by mass and at most 3 parts by mass per 100 parts by mass of composition (P).
3: The amount of the catalyst is more than 3 parts by mass and at most 4 parts by mass per 100 parts by mass of composition (P).
4: The amount of the catalyst is more than 4 parts by mass and at most 5 parts by mass per 100 parts by mass of composition (P).
5: The amount of the catalyst is more than 5 parts by mass per 100 parts by mass of composition (P).

### (Core density)

The core portion of the obtained rigid foam was cut into a cube of 150 mm×150 mm×150 mm, and from the mass and the volume, the density (unit: kg/m³) was calculated.

### (Compression strength)

The compression strength was measured in accordance with JIS K 7220. The size of the specimen was 50 mm×50 mm×50 mm. The compression strength was measured in each of the parallel direction and the vertical direction to the direction of gravitational force.

### (Evaluation of strength)

An average value of the value of the compression strength in the parallel direction and the value of the compression strength in the vertical direction was obtained, and the average value was divided by the core density to obtain a value (X). The value (X) being at least 3 was regarded as ○ (good), and the value (X) being less than 3 was regarded as × (no good).

X={(compression strength in parallel direction+compression strength in vertical direction)/2}/core density

### (Odor of foam)

The odor of the obtained rigid foam was evaluated by sensory analysis. That is, the odor of a sample (150 mm×150 mm×150 mm) of the obtained rigid foam was sniffed by 5 panelists, and based on the number of panelists who felt bad-smelling, evaluation was made by the following standards.
1: The number of panelists who felt bad-smelling is 1.
2: The number of panelists who felt bad-smelling is 2.
3: The number of panelists who felt bad-smelling is 3.
4: The number of panelists who felt bad-smelling is 4.
5: The number of panelists who felt bad-smelling is 5.

**TABLE 3**

| | | | Ex. 21 | Ex. 22 | Ex. 23 | Ex. 24 |
|---|---|---|---|---|---|---|
| Polyol system liquid | Polyol composition (P) | Polyol A1 | 85 | | | |
| | | Polyol A2 | | 85 | | |
| | | Polyol A3 | | | 85 | |
| | | Polyol A4 | | | | 85 |
| | | Polyol A5 | | | | |
| | | Polyol A6 | | | | |
| | | Polyol A7 | | | | |
| | | Polyol A8 | | | | |
| | | Polyol W1 | 15 | 15 | 15 | 15 |
| | Flame retardant | | 10 | 10 | 10 | 10 |
| | Foam stabilizer | | 1 | 1 | 1 | 1 |
| | Catalyst A | | 1.5 | 1 | 1.5 | 3 |
| | Water (blowing agent) | | 5 | 5 | 5 | 5 |
| Polyisocyanate compound (I) | | | 164 | 164 | 164 | 164 |
| Isocyanate index | | | 110 | 110 | 110 | 110 |
| Simplified foaming | Cream time (sec) | | 7.2 | 6.6 | 6.3 | 5.6 |
| | Gel time (sec) | | 15.1 | 15.3 | 15.5 | 16.0 |
| | Tack-free time (sec) | | 18.1 | 18.7 | 19.3 | 23.3 |
| | Reactivity evaluation | | 1 | 1 | 1 | 2 |
| | Core density (kg/m³) | | 26.4 | 24.8 | 24.8 | 25.7 |
| | Compression strength (kPa) | Parallel direction | 120.0 | 118.1 | 126.4 | 129.2 |
| | | Vertical direction | 54.9 | 39.1 | 44.8 | 63.2 |
| | (Average of parallel direction and vertical direction)/density | | 3.32 | 3.17 | 3.45 | 3.74 |
| | Strength evaluation | | ○ | ○ | ○ | ○ |
| | Odor of foam | | 2 | 2 | 2 | 1 |

From the results in Table 3, in Ex. 21 to 24 using polyols A1 to A4 obtained in Ex. 1 to 4, the reactivity is good. The obtained rigid foams have good appearance and low densities, and yet have good compression strength and little odor.

### <Ex. 31 to 39 and Ex. 41 to 53: Production of rigid foams>

In the blend ratio as shown in Table 4 or 6, a polyol system liquid was prepared, and using it and polyisocyanate compound (I), a rigid foam was produced and evaluated by the following methods. The unit of the blend ratio shown in Table 4 or 6 is "parts by mass".

Ex. 31 to 34 and Ex. 41 to 53 are Examples of the present invention, and Ex. 35 to 39 are Comparative Examples.

The polyol system liquid was prepared by adding and mixing the catalyst, the foam stabilizer and the flame retardant to composition (P) composed of a mixture of polyol (A) and polymer-dispersed polyol (W), and water as a blowing agent. As the blowing agent, only water was used. In Table 4, the hydroxy value (unit: mgKOH/g) of the entire composition (P) and the viscosity (unit: mPa·s) at 25°C of the polyol system liquid are shown. The viscosity of the polyol system liquid was measured in accordance with JIS K 1557-5 at a measuring temperature of 25°C.

Further, the amounts of the polyol system liquid and polyisocyanate compound (I) to be used for the production of a rigid foam were adjusted to be 1/1 by volume ratio. The isocyanate index and amount (unit: parts by mass) of polyisocyanate compound (I) used at that time are shown in Table 4.

### [Spraying test]

By means of a spray foaming machine (trade name: FF-1600) manufactured by Gusmer, the polyol system liquid and polyisocyanate compound (I) were foamed and reacted to produce a rigid foam under conditions of a discharge pressure of from 70 to 85 kg/m², a liquid temperature of 40°C and a room temperature of 20°C.

As the substrate to be sprayed, a flexible plate of 600 mm (in length)x600 mm (in width)x5 mm (in thickness) was used, and spraying was applied thereto. Spraying was carried out to form a lower sprayed layer having a thickness of 1 mm and then form two layers each having a thickness of from 25 to 30 mm, thereby to laminate three layers in total.

The application efficiency, formability and mixing property in the spraying, and the compression strength, dimensional stability, density, thermal conductivity and flame retardancy of the obtained rigid foam were evaluated by the following methods. The evaluation results are shown in Tables 5 and 7.

### (Evaluation methods)

### (Spray pattern (spraying efficiency))

The spreading degree of the spray mist was visually confirmed and evaluated by the following three grades.
3: Spreading of the mist becomes sufficiently wide in angle, whereby flat and smooth spraying is possible.
2: Spreading of the mist is insufficient to some extent, whereby flat and smooth spraying is difficult to some extent.
1: Spreading of the mist is insufficient, whereby flat and smooth spraying is difficult.

### (Internal state of foam (formability))

An end portion of the formed foam was cut, and the cross-sectional state was confirmed and evaluated by the following standards.
x (no good): In the interior of the foam, coloration or cracking due to e.g. scorch is observed, or a defective portion such as non-uniformity of cells is observed.
○ (good): In the interior of the foam, coloration or cracking due to e.g. scorch, or a defective portion such as non-uniformity of cells is not observed.

### (Mixing property)

The foam immediately after spraying was observed, and the uniformity of the cells and hue was visually confirmed. Evaluation was made by three grades as follows.
3: Cells are uniform without mixed plaque, and the hue is uniform.
2: Cells are non-uniform, or one of mixed plaque is observed.
1: Cells are non-uniform, mixed plaque is observed, and the hue is non-uniform.

### (Odor at the time of spraying)

The odor at the time of spraying was sniffed by 5 panelists, and based on the number of panelists who felt bad-smelling, evaluation was made by the following standards.
1: The number of panelists who felt bad-smelling is 1.
2: The number of panelists who felt bad-smelling is 2.
3: The number of panelists who felt bad-smelling is 3.
4: The number of panelists who felt bad-smelling is 4.
5: The number of panelists who felt bad-smelling is 5.

### (Compression strength)

The compression strength of the obtained rigid foam was measured in accordance with JIS K 7220. The compression strength was measured in the direction parallel to the spraying direction.

### (Dimensional change (dimensional stability at high temperature))

A foam cut out in a cuboid of 100 mm×100 mmx40 mm was maintained in an environment of 70°C, and after expiration of 24 hours, the dimensional change (unit: %) in the direction vertical to the foaming direction was measured.

### (Core density)

The core portion of the rigid foam was cut into a cube of 100 mm (in length)×100 mm (in width)x100 mm (in thickness), and from the mass and the volume, the density (unit: kg/m³) was calculated.

### (Thermal conductivity)

The thermal conductivity (unit: W/m.K) was measured in accordance with JIS A 1412-2 at an average temperature of 20°C by means of a thermal conductivity measuring apparatus (trade name: Auto Lambda HC-074 Model, manufactured by EKO Instruments). The lower the thermal conductivity, the better the heat-insulating property.

### (Flame retardancy test)

For a flame retardancy test, the sample including the flexible plate obtained in the above spraying test, was cut to have a thickness of 20 mm, and a heat generation test by a Cone calorimeter was carried out in accordance with ISO5660.

As shown in Tables 5 and 7, as obtained results, HRR represents the maximum heat generation rate, and THR represents the total heat value. According to ISO 5660, in the test for 5 minutes as a standard for fire-retarding material, a case where HRR being at least 200 kW/m² continues at least 10 seconds, a case where THR is at least 8 MJ/m², or a case where there is a crack or hole extending to the rear side which is hazardous from the viewpoint of prevention of fire, is regarded as "rejected". The crack and penetration are evaluated by visual observation of the appearance. One having no crack and/or penetration was rated as the appearance evaluation being ○ (good) and judged to be "acceptable". One having a crack and/or penetration was rated as the appearance evaluation being × (no good) and judged to be "rejected".

### [Simplified foaming test]

In the same manner as in Ex. 21, the reactivity (cream time and rise time) and the core density of the rigid foam were evaluated by a simplified foaming test. The evaluation results are shown in Tables 5 and 7.

**TABLE 4**

| | | | Ex. 31 | Ex. 32 | Ex. 33 | Ex. 34 | Ex. 35 | Ex. 36 | Ex. 37 | Ex. 38 | Ex. 39 |
|---|---|---|---|---|---|---|---|---|---|---|---|
| | | Polyol A1 | 39 | | | | | | | | |
| | | Polyol A2 | | 39 | | | | | | | |
| | | Polyol A3 | | | 39 | | | | | | |
| | | Polyol A4 | | | | 39 | | | | | |
| | | Polyol A5 | | | | | 39 | | | | |
| | | Polyol A6 | | | | | | 39 | | | |
| | | Polyol A7 | | | | | | | 39 | | |
| | Polyol | Polyol A8 | | | | | | | | 39 | |
| | composition (P) | Polyol A9 | | | | | | | | | 39 |
| | | Polyol C1 | 55 | 55 | 55 | 55 | 55 | 55 | 55 | 55 | 55 |
| | | Polyol W1 | 6 | 6 | 6 | 6 | 6 | 6 | 6 | 6 | 6 |
| Polyol | | Polyol W2 | | | | | | | | | |
| system | | Polyol W3 | | | | | | | | | |
| liquid | | Polyol W4 | | | | | | | | | |
| | | Polyol W5 | | | | | | | | | |
| | | Polyol W6 | | | | | | | | | |
| | Flame retardant | | 30 | 30 | 30 | 30 | 30 | 30 | 30 | 30 | 30 |
| | Foam stabilizer | | 1 | 1 | 1 | 1 | 1 | 1 | 1 | 1 | 1 |
| | Catalyst B | | 4.0 | 4.0 | 4.0 | 4.0 | 4.0 | 4.0 | 4.0 | 4.0 | 4.0 |
| | Catalyst C | | 4.0 | 4.0 | 4.0 | 4.0 | 4.0 | 4.0 | 4.0 | 4.0 | 4.0 |
| | Catalyst D | | 3.0 | 3.0 | 3.0 | 3.0 | 3.0 | 3.0 | 3.0 | 3.0 | 3.0 |
| | Water (blowing agent) | | 5 | 5 | 5 | 5 | 5 | 5 | 5 | 5 | 5 |
| | Hydroxy value of composition (P) (mgKOH/g) | | 310 | 310 | 310 | 310 | 310 | 310 | 310 | 310 | 310 |
| | Viscosity of polyol system liquid (mPa·s) | | 480 | 430 | 430 | 430 | 580 | 570 | 430 | 430 | 500 |
| Polyisocyanate compound (I) | | | 171 | 171 | 171 | 171 | 171 | 171 | 171 | 171 | 171 |
| Isocyanate index | | | 114 | 114 | 114 | 114 | 114 | 114 | 114 | 114 | 114 |

**TABLE 5**

| | | | | Ex. 31 | Ex. 32 | Ex. 33 | Ex. 34 | Ex. 35 | Ex. 36 | Ex. 37 | Ex. 38 | Ex. 39 |
|---|---|---|---|---|---|---|---|---|---|---|---|---|
| | Spray pattern | | | 3 | 3 | 3 | 3 | 1 | 1 | 3 | 3 | 1 |
| | Internal state of foam | | | ○ | ○ | ○ | ○ | × | × | ○ | ○ | ○ |
| | Mixing property | | | 3 | 3 | 3 | 3 | 1 | 1 | 3 | 3 | 2 |
| | Odor at the time of application | | | 1 | 1 | 1 | 1 | 1 | 1 | 5 | 5 | 5 |
| | Compression strength in parallel direction (MPa) | | | 0.10 | 0.09 | 0.10 | 0.10 | 0.12 | 0.12 | 0.06 | 0.05 | 0.05 |
| | Dimensional change (%) | | | -0.2 | -0.2 | -0.4 | -0.5 | -0.8 | -0.6 | -1.9 | -1.6 | -0.5 |
| Spraying | Core density (kg/m³) | | | 32.2 | 32.2 | 32.7 | 32.1 | 37.5 | 36.8 | 32.6 | 31.7 | 32.7 |
| | Thermal conductivity (mW/m·K) | | | 32 | 31 | 32 | 32 | 31 | 31 | 32 | 30 | 31 |
| | Flame retardancy test | Cone calorimeter | HRR (kW/m²) | 160.0 | 161.0 | 160.5 | 161.1 | 195.0 | 165.7 | 171.0 | 167.5 | 165.4 |
| | | | THR (MJ/m²) | 7.5 | 7.5 | 7.2 | 7.4 | 9.5 | 9.7 | 7.8 | 7.5 | 7.8 |
| | | Appearance | | ○ | ○ | ○ | ○ | × | × | ○ | ○ | ○ |
| | | Judgment | | Pass | Pass | Pass | Pass | Fail | Fail | Pass | Pass | Pass |
| Simplified foaming | Cream time (sec) | | | 5 | 5 | 5 | 5 | 7 | 7 | 5 | 5 | 5 |
| | Rise time (sec) | | | 15 | 14 | 14 | 14 | 21 | 20 | 12 | 13 | 15 |
| | Core density (kg/m³) | | | 23.3 | 23.5 | 23.5 | 23.4 | 27.8 | 27.5 | 23.6 | 23.5 | 23.6 |

**TABLE 6**

| | | | Ex. 41 | Ex. 42 | Ex. 43 | Ex. 44 | Ex. 45 | Ex. 46 | Ex. 47 | Ex. 48 | Ex. 49 | Ex. 50 | Ex. 51 | Ex. 52 | Ex. 53 |
|---|---|---|---|---|---|---|---|---|---|---|---|---|---|---|---|
| | Polyol composition (P) | Polyol A3 | 39 | 39 | 39 | 39 | 39 | 42 | 44 | 42 | 44 | 42 | 44 | 42 | 44 |
| | | Polyol C1 | 55 | 55 | 55 | 55 | 55 | 55 | 55 | 55 | 55 | 55 | 55 | 55 | 55 |
| | | Polyol W2 | 6 | | | | | | | | | | | | |
| | | Polyol W3 | | 6 | | | | 3 | 1 | | | | | | |
| | | Polyol W4 | | | 6 | | | | | 3 | 1 | | | | |
| | | Polyol W5 | | | | 6 | | | | | | 3 | 1 | | |
| | | Polyol W6 | | | | | 6 | | | | | | | 3 | 1 |
| Polyol | Flame retardant | | 30 | 30 | 30 | 30 | 30 | 30 | 30 | 30 | 30 | 30 | 30 | 30 | 30 |
| system | Foam stabilizer | | 1 | 1 | 1 | 1 | 1 | 1 | 1 | 1 | 1 | 1 | 1 | 1 | 1 |
| liquid | Catalyst B | | 4.0 | 4.0 | 4.0 | 4.0 | 4.0 | 4.0 | 4.0 | 4.0 | 4.0 | 4.0 | 4.0 | 4.0 | 4.0 |
| | Catalyst C | | 4.0 | 4.0 | 4.0 | 4.0 | 4.0 | 4.0 | 4.0 | 4.0 | 4.0 | 4.0 | 4.0 | 4.0 | 4.0 |
| | Catalyst D | | 3.0 | 3.0 | 3.0 | 3.0 | 3.0 | 3.0 | 3.0 | 3.0 | 3.0 | 3.0 | 3.0 | 3.0 | 3.0 |
| | Water (blowing agent) | | 5 | 5 | 5 | 5 | 5 | 5 | 5 | 5 | 5 | 5 | 5 | 5 | 5 |
| | Hydroxy value of composition (P) (mgKOH/g) | | 310 | 310 | 302 | 305 | 306 | 309 | 309 | 305 | 307 | 307 | 308 | 307 | 308 |
| | Viscosity of polyol system liquid (mPa·s) | | 430 | 430 | 430 | 430 | 430 | 430 | 430 | 430 | 430 | 430 | 430 | 430 | 430 |
| Polyisocyanate compound (I) | | | 171 | 171 | 171 | 171 | 171 | 171 | 171 | 171 | 171 | 171 | 171 | 171 | 171 |
| Isocyanate index | | | 114 | 114 | 115 | 115 | 115 | 114 | 114 | 115 | 114 | 115 | 114 | 114 | 114 |

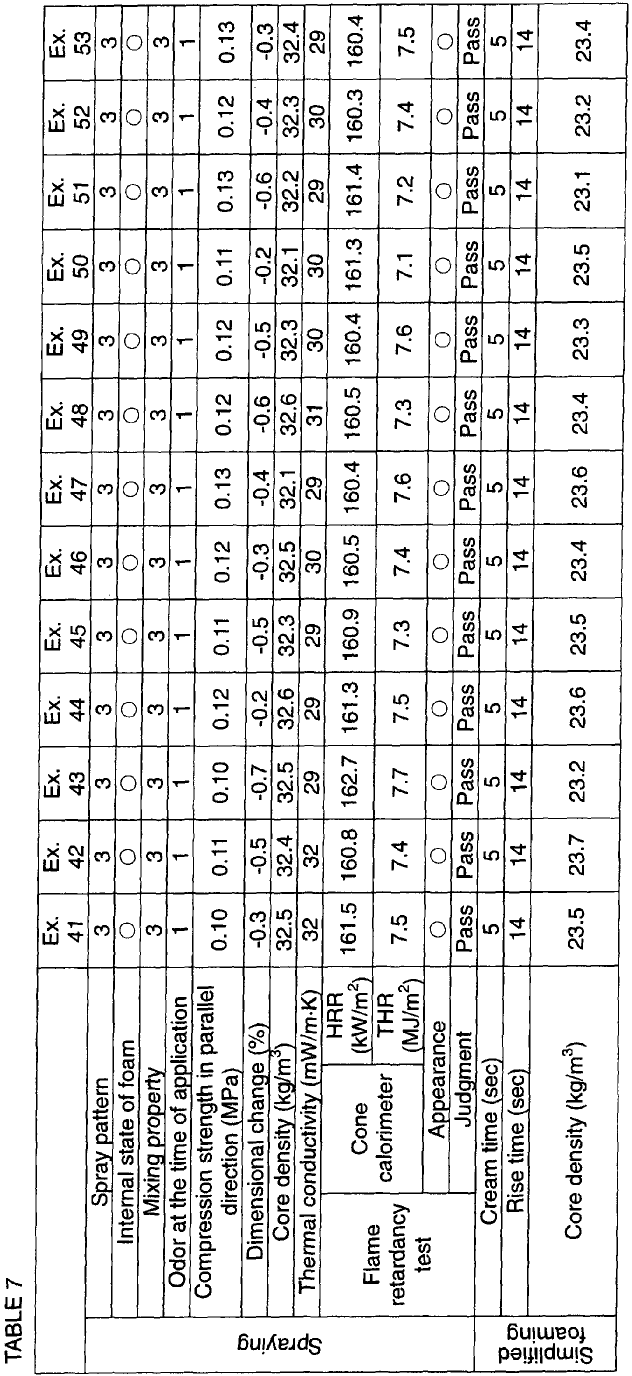

From the results in Tables 5 and 7, in Ex. 31 to 34 and Ex. 41 to 53 wherein polyols A1 to A4 obtained in Ex. 1 to 4 were used, the reactivity was good. The obtained rigid foams had a good appearance, and while having a low density, they had good compression strength and also little odor. Further, despite that the blowing agent was only water, the viscosity of the polyol system liquid was low, and in the spray method, the mixing property, working efficiency and formability were good. The rigid foams obtained by the spray method had good compression strength and dimensional stability while having a low viscosity, and were excellent also in flame retardancy and heat-insulating properties.

Polyol A5 wherein the alkylene oxide added by ring-opening addition to the initiator was only PO, had a high polyol viscosity and a low primary rate of terminal hydroxy groups. In Ex. 35 wherein the rigid foam was produced by using such polyol A5, the reactivity was poor. In the spray foaming, since the reactivity was poor, the spray pattern deteriorated, and it was difficult to form a rigid foam smooth and flat by spraying. In the flame retardancy test, the evaluation was "rejected".

Polyol A6 has an EO/(PO+EO) value which is higher than polyol A4, but has a low primary rate of terminal hydroxy groups, since only PO was added by ring-opening addition in the second step. Further, the polyol had an odor. In Ex. 36 wherein the rigid foam was produced by using such polyol A6, the reactivity was poor, and the obtained rigid foam had an odor. Since the reactivity was poor, the pattern deteriorated, and it was difficult to form the rigid foam smooth and flat by spraying. In the flame retardancy test, the evaluation was "rejected".

Polyol A7 is one wherein the alkylene oxide added by ring-opening addition to the initiator was only EO, and the polyol had an odor. In Ex. 37 wherein the rigid foam was produced by using such polyol A7, the compression strength was poor, and the obtained rigid foam had an odor. In the spray foaming, the strength of the rigid foam decreased, and the dimensional change became large, and the obtained rigid foam underwent shrinkage.

Polyol A8 is one wherein only EO was added by ring-opening addition to the initiator in the presence of a catalyst, and the polyol had an odor. In Ex. 38 wherein the rigid foam was produced by using such polyol A8, the compression strength was poor, and the obtained rigid foam had an odor. In the spray foaming, the strength of the rigid foam decreased, and the dimensional change became large, and the obtained rigid foam underwent shrinkage.

Polyol A9 is one wherein PO was added by ring-opening addition to the initiator in the presence of a catalyst and then, EO was added by ring-opening addition in the presence of a catalyst, whereby the viscosity of the polyol was high. In Ex. 39 wherein the rigid foam was produced by using such polyol A9, as compared with Ex. 31 wherein polyol A1 having PO added by ring-opening addition to the initiator without using a catalyst, was used, in the spraying test, spreading of the sprayed mist was insufficient, and smooth and flat spraying was difficult.

### INDUSTRIAL APPLICABILITY

The polyether polyol obtainable by the present invention is useful as a raw material for a rigid foam synthetic resin such as a rigid polyurethane foam, and the rigid foam synthetic resin obtainable by the present invention is useful as a building material having a heat insulating property or for various apparatus, etc.

The entire disclosure of Japanese Patent Application No. 2010-272684 filed on December 7, 2010 including specification, claims, drawings and summary is incorporated herein by reference in its entirety.

## Claims

1. A method for producing a polyether polyol, which comprises ring-opening addition of an alkylene oxide to an initiator which is a reaction product obtainable by reacting the following phenol, the following aldehyde and the following alkanolamine, wherein
the step of ring-opening addition of an alkylene oxide to an initiator comprises a first step of ring-opening addition of at least one member selected from propylene oxide and butylene oxide to the initiator in the absence of a catalyst, and a second step of ring-opening addition of an alkylene oxide of which at least a part is ethylene oxide, to a reaction product of the first step, in the presence of a catalyst, and
the proportion of ethylene oxide in the total amount of the alkylene oxide to be added by the ring-opening addition to the initiator, is from 5 to 95 mol%:
Phenol: at least one member selected from the group consisting of phenol and phenol derivatives wherein at least one ortho position is unsubstituted,
Aldehyde: at least one member selected from the group consisting of formaldehyde and acetaldehyde,
Alkanolamine: at least one member selected from the group consisting of monoethanolamine, diethanolamine and 1-amino-2-propanol.

2. The method for producing a polyether polyol according to Claim 1, wherein the proportion of ethylene oxide in the total amount of the alkylene oxide to be added by the ring-opening addition to the initiator, is from 10 to 90 mol%.

3. The method for producing a polyether polyol according to Claim 1 or 2, wherein the proportion of the number of primary hydroxy groups in the total number of hydroxy groups of the polyether polyol is from 50 to 100%.

4. The method for producing a polyether polyol according to any one of Claims 1 to 3, wherein the second step is a step wherein the ring-opening addition reaction is carried out in one stage, and in such one stage, only ethylene oxide is added by ring-opening addition, or a step wherein the ring-opening addition reaction is carried out in two or more stages, and in the final stage, only ethylene oxide is added by ring-opening addition.

5. The method for producing a polyether polyol according to any one of Claims 1 to 4, wherein per 1 mol of the phenol, the aldehyde is used in an amount of at least 0.2 mol and at most 2 mol, and the alkanolamine is used in an amount of at least 1.5 mol and at most 10.5 mol.

6. The method for producing a polyether polyol according to Claim 5, wherein per 1 mol of the phenol, the aldehyde is used in an amount of at least 0.3 mol and at most 1.8 mol, and the alkanolamine is used in an amount of at least 2 mol and at most 10.5 mol.

7. The method for producing a polyether polyol according to any one of Claims 1 to 6, wherein the phenol derivatives are alkyl phenols substituted by at least one C₁₋₁₅ alkyl group.

8. The method for producing a polyether polyol according to any one of Claims 1 to 7, wherein the hydroxy value of the polyether polyol is from 200 to 800 mgKOH/g.

9. A method for producing a rigid foam synthetic resin, which comprises reacting a polyol composition and a polyisocyanate compound in the presence of a blowing agent, a foam stabilizer and a catalyst, wherein the blowing agent contains water, and the polyol composition contains a polyether polyol obtainable by the method as defined in any one of Claims 1 to 8.

10. The method for producing a rigid foam synthetic resin according to Claim 9, wherein the content of the polyether polyol in the polyol composition is from 20 to 100 mass%.

11. The method for producing a rigid foam synthetic resin according to Claim 9 or 10, wherein water is used alone as the blowing agent.

12. The method for producing a rigid foam synthetic resin according to any one of Claims 9 to 11, wherein the polyol composition contains a polymer-dispersed polyol.

13. The method for producing a rigid foam synthetic resin according to Claim 12, wherein the hydroxy value of the polymer-dispersed polyol is from 100 to 800 mgKOH/g.

14. The method for producing a rigid foam synthetic resin according to any one of Claims 9 to 13, wherein a spray method is used.
